# EUROPEAN PATENT APPLICATION

(11) **EP 4 852 522 A1**
(43) Date of publication of application: **09.12.2026**
(21) Application number: 25773040.8
(22) Date of filing: 17.03.2025
(51) Int. Cl.: H04W 36/00

(54) **COMMUNICATION METHOD, APPARATUS AND SYSTEM**

(30) Priority: 21.03.2024 CN 202410335430
(71) Applicant: HUAWEI TECHNOLOGIES CO., LTD., Shenzhen, Guangdong 518129 (CN)
(72) Inventor: YOU, Chunhua, Shenzhen, Guangdong 518129 (CN); WANG, Yan, Shenzhen, Guangdong 518129 (CN); FAN, Qiang, Shenzhen, Guangdong 518129 (CN); GU, Zhifang, Shenzhen, Guangdong 518129 (CN); LI, Jiaojiao, Shenzhen, Guangdong 518129 (CN)
(74) Representative: MERH-IP Matias Erny Reichl Hoffmann Patentanwälte PartG mbB
(86) International application number: PCT/CN2025/083014
(87) International publication number: WO 2025/195340

(57) **Abstract**

This application relates to the field of communication technologies, and discloses a communication method, apparatus, and system. The method includes: A first node receives a first message from a third node, where the first message is used to request to add the first node as a secondary node of a second multi-connectivity of a terminal, a multi-connectivity currently serving the terminal is a first multi-connectivity, a master node of the first multi-connectivity is a second node, and a secondary node of the first multi-connectivity is the first node; and sends a second message to the third node in response to the first message, where the second message is used to accept adding the first node as the secondary node of the second multi-connectivity, the second multi-connectivity is a candidate multi-connectivity serving the terminal, a master node of the second multi-connectivity is the third node, and the third node is a candidate master node for handover of the terminal. According to the foregoing method, a secondary node addition procedure may be performed in advance during a configuration stage, thereby facilitating fast recovery of data transmission of the secondary node, reducing latency in recovering the data transmission of the secondary node, and avoiding service interruption.

## Description

### CROSS-REFERENCE TO RELATED APPLICATIONS

This application claims priority to Chinese Patent Application No. 202410335430.2, filed with the China National Intellectual Property Administration on March 21, 2024 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

In a wireless communication system, a terminal may be simultaneously connected to a plurality of network nodes. In other words, resources of the plurality of network nodes jointly provide a communication service for the terminal, thereby implementing high-rate transmission. Such simultaneous connections are referred to as multi-connectivity (multi-connectivity). Among the plurality of network nodes, a network node that exchanges control plane signaling with a core network is referred to as a master node (master node, MN), and other network nodes are referred to as secondary nodes (secondary nodes, SNs).

However, in a cell handover scenario, how to rapidly recover data transmission of a secondary node still needs further research.

### SUMMARY

This application provides a communication method, apparatus, and system to enable fast recovery of data transmission of a secondary node.

According to a **first aspect**, an embodiment of this application provides a communication method. The method may be applied to a first node, and the first node may be a first network device or a component (for example, a chip or a circuit) in the first network device. For example, in the method provided in the first aspect, the first node receives a first message from a third node, where the first message is used to request to add the first node as a secondary node of a second multi-connectivity of a terminal, a multi-connectivity currently serving the terminal is a first multi-connectivity, a master node of the first multi-connectivity is a second node, and a secondary node of the first multi-connectivity is the first node; and sends a second message to the third node in response to the first message, where the second message is used to accept adding the first node as the secondary node of the second multi-connectivity, the second multi-connectivity is a candidate multi-connectivity serving the terminal, a master node of the second multi-connectivity is the third node, and the third node is a candidate master node for handover of the terminal.

According to the foregoing method, when the multi-connectivity currently serving the terminal is the first multi-connectivity, the third node (namely, the candidate master node) adds the first node as the secondary node of the second multi-connectivity, that is, a secondary node addition procedure may be performed in advance during a configuration stage. Therefore, when a master node of the terminal undergoes handover (for example, the master node of the terminal is switched to the third node), the third node does not need to perform the secondary node addition procedure again. This facilitates fast recovery of data transmission of the secondary node, reduces latency in recovering the data transmission of the secondary node, and avoids service interruption.

In a possible design, the method further includes: receiving a third message, where the third message indicates that the master node of the terminal is switched to the third node; and in response to the third message, determining to use the second multi-connectivity to serve the terminal.

In this way, the first node learns, based on the third message, that the master node of the terminal is switched to the third node, to determine to use the second multi-connectivity to serve the terminal, facilitating fast recovery of data transmission of the secondary node.

In a possible design, the second message includes first information, and the first information is used by the terminal to listen to a control channel of the first node after determining to use the second multi-connectivity to serve the terminal.

In this way, the first information is sent to the terminal during the configuration stage, so that after determining to use the second multi-connectivity to serve the terminal, the terminal can listen to the control channel of the first node based on the first information, without waiting for an indication for listening to the control channel of the first node, facilitating fast recovery of data transmission of the secondary node.

In a possible design, the third message is further used to request to activate a secondary cell group of the second multi-connectivity (for example, the third message includes an activation request, and the activation request is used to request to activate the secondary cell group of the second multi-connectivity), and the first node manages the secondary cell group; and the method further includes: activating the secondary cell group of the second multi-connectivity in response to the third message. Alternatively, the third message is further used to request to deactivate the secondary cell group of the second multi-connectivity (for example, the third message includes a deactivation request, and the deactivation request is used to request to activate the secondary cell group of the second multi-connectivity), and the method further includes: deactivating the secondary cell group of the second multi-connectivity in response to the third message.

In this way, when the master node of the terminal is switched to the third node, the third node determines to activate or deactivate the secondary cell group of the second multi-connectivity. For example, the third node may activate or deactivate the secondary cell group of the second multi-connectivity based on an actual requirement, so that an implementation is relatively flexible.

In a possible design, the method further includes: receiving security information from the second node or the third node. The security information includes N pieces of key information, and the N pieces of key information are associated with the second multi-connectivity, where N is an integer greater than or equal to 1. After it is determined that the second multi-connectivity is a serving multi-connectivity of the terminal, the method further includes: communicating with the terminal by using first key information, and the first key information is unused key information in the N pieces of key information.

In this way, the second node or the third node sends the security information to the first node, so that after it is determined that the second multi-connectivity is the serving multi-connectivity of the terminal, the first node can perform secure communication with the terminal.

In a possible design, the security information is carried in the first message.

In a possible design, the security information further includes N counters, and the N pieces of key information are associated with the N counters in a one-to-one manner. The method further includes: sending, to the terminal via the third node, the N counters encapsulated in a secondary node format.

In this way, the N counters are sent to the terminal, so that after it is determined that the second multi-connectivity is the serving multi-connectivity of the terminal, the terminal can perform secure communication with the first node.

In a possible design, the third message further includes second key information. After it is determined that the second multi-connectivity is the serving multi-connectivity of the terminal, the method further includes: communicating with the terminal by using the second key information.

In this way, when the master node of the terminal is switched to the third node, a handover source node may send the second key information to a handover-to target node (namely, the third node), and the third node sends the second key information to the first node by using the third message, so that the first node can perform secure communication with the terminal based on the second key information. In addition, the handover source node may send a second counter to the terminal by using a handover command message, so that the terminal can perform secure communication with the first node based on the second counter, and the second counter is associated with the second key information.

In a possible design, the first message includes first identification information, the first identification information is associated with a first configuration, and the first configuration is used for a secondary cell group of the first multi-connectivity. The method further includes: determining that the first configuration is further used for the secondary cell group of the second multi-connectivity, and the first node manages the secondary cell group of the first multi-connectivity and the secondary cell group of the second multi-connectivity.

In a possible design, the method further includes: sending a fourth message to the second node. The fourth message includes at least one of the following: the first identification information, where the first identification information is associated with the first configuration, and the first configuration is used for the secondary cell group of the first multi-connectivity; identification information of a used RB, where the used RB terminates at the first node; and QoS flow information mapped to the used RB.

In this way, after the first node sends the first identification information to the second node, the second node can send the first identification information to different candidate master nodes. Further, regardless of whether multi-connectivity is configured for the candidate master node, the candidate master node can communicate with the first node based on the first identification information. In this way, after the first node sends, to the second node, the identification information of the used RB and the QoS flow information mapped to the used RB, the second node can send, to the different candidate master nodes, the identification information of the used RB and the QoS flow information mapped to the used RB. Further, when the candidate master node is not configured with multi-connectivity, the candidate master node can change the node at which the used RB terminates to itself.

In a possible design, the method further includes: receiving a fifth message from a fourth node, where the fifth message is used to request to add the first node as a secondary node of a third multi-connectivity of the terminal, a master node of the third multi-connectivity is the fourth node, and the fourth node is a candidate master node for handover of the terminal; and sending a sixth message to the fourth node in response to the fifth message, where the sixth message is used to reject adding the first node as the secondary node of the third multi-connectivity.

For another example, in the method provided in the first aspect, the first node receives the fifth message from the fourth node, where the fifth message is used to request to add the first node as the secondary node of the third multi-connectivity of the terminal, the multi-connectivity currently serving the terminal is the first multi-connectivity, the master node of the first multi-connectivity is the second node, and the secondary node of the first multi-connectivity is the first node; and sends the sixth message to the fourth node in response to the fifth message, where the sixth message indicates to reject adding the first node as the secondary node of the third multi-connectivity, the third multi-connectivity is a candidate multi-connectivity serving the terminal, the master node of the third multi-connectivity is the fourth node, and the fourth node is a candidate master node for handover of the terminal.

According to a **second aspect**, an embodiment of this application provides a communication method. The method may be applied to a third node, and the third node may be a third network device or a component (for example, a chip or a circuit) in the third network device. For example, in the method provided in the second aspect, a third node sends a first message to a first node, where the first message is used to request to add the first node as a secondary node of a second multi-connectivity of a terminal, a multi-connectivity currently serving the terminal is a first multi-connectivity, a master node of the first multi-connectivity is a second node, and a secondary node of the first multi-connectivity is the first node; and receives a second message from the first node, where the second message is used to accept adding the first node as the secondary node of the second multi-connectivity, the second multi-connectivity is a candidate multi-connectivity serving the terminal, a master node of the second multi-connectivity is the third node, and the third node is a candidate master node for handover of the terminal.

In a possible design, the method further includes: sending a third message to the first node, and the third message indicates that a master node of the terminal is switched to the third node.

In a possible design, the third message is further used to request to activate a secondary cell group of the second multi-connectivity or deactivate the secondary cell group of the second multi-connectivity, and the first node manages the secondary cell group.

In a possible design, the method further includes: sending security information. The security information includes N pieces of key information, and the N pieces of key information are associated with the second multi-connectivity, where N is an integer greater than or equal to 1.

In a possible design, the security information further includes N counters, and the N pieces of key information are associated with the N counters in a one-to-one manner. The method further includes: receiving, from the first node, the N counters encapsulated in a secondary node format; and sending, to the terminal via the second node, the N counters encapsulated in the secondary node format.

In a possible design, the method further includes: receiving first identification information from the second node. The first identification information is associated with a first configuration, and the first configuration is used for a secondary cell group of the first multi-connectivity; and the first message includes the first identification information.

In a possible design, the method further includes: receiving sequence number status information of a used RB, where the used RB terminates at the first node; and sending the sequence number status information to the first node, where the sequence number status information is used to determine a reception window of a packet data convergence protocol PDCP.

According to a **third aspect**, an embodiment of this application provides a communication method. The method may be applied to a fourth node, and the fourth node may be a fourth network device or a component (for example, a chip or a circuit) in the fourth network device. For example, in the method provided in the third aspect, the fourth node sends a fifth message to a first node, where the fifth message is used to request to add the first node as a secondary node of a third multi-connectivity of a terminal, a multi-connectivity currently serving the terminal is a first multi-connectivity, a master node of the first multi-connectivity is a second node, and a secondary node of the first multi-connectivity is the first node; receives a sixth message from the first node, where the sixth message is used to reject adding the first node as the secondary node of the third multi-connectivity, the third multi-connectivity is a candidate multi-connectivity serving the terminal, a master node of the third multi-connectivity is the fourth node, and the fourth node is a candidate master node for handover of the terminal.

In a possible design, the method further includes: receiving identification information of a used RB, where the used RB terminates at the first node; and determining that a node at which the used RB terminates is changed to the fourth node.

In a possible design, the method further includes: sending a handover command message to the terminal, where the handover command message indicates a master node of the terminal is switched to a third node; and sending sequence number status information of the used RB to the third node, where the sequence number status information is used to determine a reception window of a packet data convergence protocol PDCP.

In a possible design, the handover command message further indicates a second counter; and the method further includes: sending second key information. The second key information is used by the first node to communicate with the terminal, and the second key information is associated with the second counter.

According to a **fourth aspect**, an embodiment of this application provides a communication method. The method may be applied to a second node, and the second node may be a second network device or a component (for example, a chip or a circuit) in the second network device. For example, in the method provided in the fourth aspect, the second node receives a fourth message from a first node, where the fourth message includes first identification information, the first identification information is associated with a first configuration, the first configuration is used for a secondary cell group of a first multi-connectivity of a terminal, a multi-connectivity currently serving the terminal is the first multi-connectivity, a master node of the first multi-connectivity is the second node, and a secondary node of the first multi-connectivity is the first node; and sends the first identification information to a third node, where the third node is a candidate master node for handover.

In this way, after the first node sends the first identification information to the second node, the second node can send the first identification information to candidate master nodes. Further, regardless of whether multi-connectivity is configured for the candidate master node, the candidate master node can communicate with the first node based on the first identification information.

In a possible design, the fourth message further includes identification information of a used RB and/or QoS flow information mapped to the used RB, and the used RB terminates at the first node. The second node is the master node of the first multi-connectivity of the terminal, the first node is the secondary node of the first multi-connectivity, and the first multi-connectivity is a serving multi-connectivity of the terminal. The identification information of the used RB and/or the QoS flow information mapped to the used RB is sent to the third node.

In this way, after the first node sends, to the second node, the identification information of the used RB and the QoS flow information mapped to the used RB, the second node can send, to the candidate master nodes, the identification information of the used RB and the QoS flow information mapped to the used RB. Further, when the candidate master node is not configured with multi-connectivity, the candidate master node can change a node at which the used RB terminates to the candidate master node itself.

In a possible design, the method further includes: sending security information. The security information includes N pieces of key information, and the N pieces of key information are associated with at least one candidate multi-connectivity of the terminal, where N is an integer greater than or equal to 1. The at least one candidate multi-connectivity includes a second multi-connectivity, a master node of the second multi-connectivity is the third node, and a secondary node of the second multi-connectivity is the first node.

In a possible design, the security information further includes N counters, and the N pieces of key information are associated with the N counters in a one-to-one manner. The method further includes: receiving the N counters encapsulated in a secondary node format; and sending the N counters encapsulated in the secondary node format to the terminal.

According to a **fifth aspect**, an embodiment of this application provides a communication method. The method may be applied to a terminal side apparatus, and the terminal side apparatus may be a terminal or a component (for example, a chip or a circuit) in the terminal. For example, in the method provided in the fifth aspect, the terminal side apparatus receives N counters encapsulated in a secondary node format, where the N counters are associated with a second multi-connectivity, a master node of the second multi-connectivity is a third node, a secondary node of the second multi-connectivity is a first node, and the third node is a candidate master node for handover; and after a master node of the terminal side apparatus is switched to the third node, communicates with the first node by using a first counter, where the first counter is an unused counter in the N counters.

For another example, in the method provided in the fifth aspect, the terminal side apparatus receives a handover command message, where the handover command message indicates that the master node of the terminal is switched to the third node, the third node is the master node of the second multi-connectivity of the terminal, and the secondary node of the second multi-connectivity is the first node; and the handover command message includes a second counter; and after the master node of the terminal side apparatus is switched to the third node, the terminal side apparatus communicates with the first node by using the second counter.

In a possible design, the method further includes: receiving the handover command message, where the handover command message indicates the master node of the terminal side apparatus is switched to the third node; and in response to the handover command message, determining to use the second multi-connectivity to serve the terminal side apparatus.

In a possible design, the method further includes: receiving first information, where the first information is used to listen to a control channel of the first node after it is determined to use the second multi-connectivity to serve the terminal side apparatus; and after it is determined to use the second multi-connectivity to service the terminal side apparatus, listening to the control channel of the first node based on the first information.

In a possible design, the method further includes: receiving a second configuration. The second configuration is used for a secondary cell group of the second multi-connectivity, and the first information is included in the second configuration.

According to a **sixth aspect**, this application provides a communication apparatus. The communication apparatus can implement a function in any one of the first aspect to the fifth aspect. For example, the communication apparatus includes a corresponding module, unit, or means for performing operations in any one of the first aspect to the fifth aspect. The function, the unit, or the means may be implemented by software, hardware, or hardware executing corresponding software.

In a possible design, the communication apparatus includes a processing unit and a communication unit. The communication unit may be configured to receive/send a signal, to implement communication between the communication apparatus and another apparatus. The processing unit may be configured to perform some internal operations of the communication apparatus. Functions performed by the processing unit and the communication unit may correspond to the operations in any one of the first aspect to the fifth aspect.

In a possible design, the communication apparatus includes a processor, and the processor may be configured to be coupled to a memory. The memory may store a computer program or instructions necessary for implementing the function in any one of the first aspect to the fifth aspect. The processor may execute the computer program or the instructions stored in the memory. When the computer program or the instructions are executed, the communication apparatus is enabled to implement the method in any possible design or implementation in the first aspect to the fifth aspect.

In a possible design, the communication apparatus includes a processor and a memory, and the memory may store a computer program or instructions necessary for implementing the function in any one of the first aspect to the fifth aspect. The processor may execute the computer program or the instructions stored in the memory. When the computer program or the instructions are executed, the communication apparatus is enabled to implement the method in any possible design or implementation in the first aspect to the fifth aspect.

In a possible design, the communication apparatus includes a processor and an interface circuit. The processor is configured to: communicate with another apparatus through the interface circuit, and perform the method in any possible design or implementation in the first aspect to the fifth aspect.

It may be understood that, in the sixth aspect, the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a **seventh aspect**, this application provides a communication system. The communication system may include a first node and a third node, the first node is configured to perform the method according to the first aspect, and the third node is configured to perform the method according to the second aspect.

Optionally, the communication system further includes a second node, and the second node is configured to perform the method according to the fourth aspect.

Optionally, the communication system further includes a fourth node, and the fourth node is configured to perform the method according to the third aspect.

Optionally, the communication system further includes a terminal side apparatus, and the terminal side apparatus is configured to perform the method according to the fifth aspect.

According to an **eighth aspect**, this application provides a computer-readable storage medium. The computer storage medium stores computer-readable instructions. When a computer reads and executes the computer-readable instructions, the computer is enabled to perform the method in any possible design in the first aspect to the fifth aspect.

For example, the computer-readable storage medium may be any usable medium that can be accessed by the computer. By way of example and not limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disc storage, a magnetic disk storage medium or another magnetic storage device, or any other medium that can be configured to carry or store desired program code in a form of instructions or a data structure and that is accessible to the computer.

According to a **ninth aspect**, this application provides a computer program product. When a computer reads and executes the computer program product, the computer is enabled to perform the method in any possible design in the first aspect to the fifth aspect.

According to a **tenth aspect**, this application provides a chip (or a chip system). The chip includes a processor, and the processor is coupled to a memory, and is configured to read and execute a software program stored in the memory, to implement the method in any possible design in the first aspect to the fifth aspect.

### BRIEF DESCRIPTION OF DRAWINGS

FIG. 1 is a diagram of a communication system to which an embodiment of this application is applicable;
FIG. 2 is a diagram of a CU-DU split architecture according to an embodiment of this application;
FIG. 3 is a schematic flowchart corresponding to a communication method according to a first embodiment of this application;
FIG. 4 is a possible example block diagram of an apparatus according to an embodiment of this application;
FIG. 5 is a diagram of a structure of a network side apparatus according to an embodiment of this application; and
FIG. 6 is a diagram of a structure of a terminal side apparatus according to an embodiment of this application.

### DESCRIPTION OF EMBODIMENTS

The following describes the technical solutions in embodiments of this application with reference to the accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system, for example, a long term evolution (long term evolution, LTE) system, a 5th generation (5th generation, 5G) mobile communication system, for example, a new radio (new radio, NR) system, and a future evolved communication system, for example, a 6th generation (6th generation, 6G) mobile communication system.

All aspects, embodiments, or features are presented in this application by describing a system that may include a plurality of devices, components, modules, and the like. It should be appreciated and understood that each system may include another device, component, module, and the like, and/or may not include all devices, components, modules, and the like described with reference to the accompanying drawings. In addition, a combination of these solutions may be used. In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner. In embodiments of this application, "of (of)", "corresponding, relevant (corresponding, relevant)", and "corresponding (corresponding)" may be interchangeably used sometimes. It should be noted that meanings expressed by the terms are consistent when differences of the terms are not emphasized.

The communication system and the service scenario that are described in embodiments of this application are intended to describe the technical solutions in embodiments of this application more clearly, and do not constitute a limitation on the technical solutions provided in embodiments of this application. A person of ordinary skill in the art may know that with evolution of network architectures and emergence of new service scenarios, the technical solutions provided in embodiments of this application are also applicable to similar technical problems.

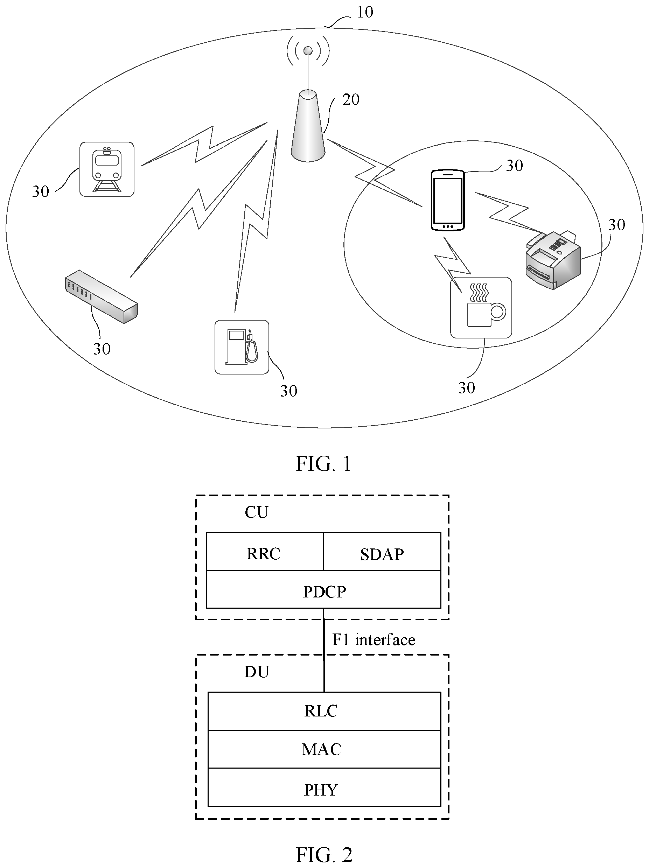

For ease of understanding embodiments of this application, a communication system shown in FIG. 1 is first used as an example to describe in detail a communication system applicable to embodiments of this application. As shown in FIG. 1, the communication system 10 includes one or more network nodes 20 and one or more terminals 30, and optionally, further includes one or more core network elements in a core network (not shown in the figure). An interface between the network node and the terminal may be a Uu interface (or referred to as an air interface), and data transmission may be performed between the network node 20 and the terminal 30 by using an air interface resource. For example, the terminal may be located in a communication coverage area of one or more cells managed by the network node, and there may be one or more cells providing services for the terminal (namely, serving cells of the terminal).

### (1) Terminal

The terminal may be a device that accesses the foregoing communication system and has a wireless transceiver function. The terminal may also be referred to as user equipment (user equipment, UE), a terminal device, a user apparatus, an access terminal, a subscriber unit, a subscriber station, a mobile station (mobile station, MS), a remote station, a remote terminal, a mobile device, a user terminal, a terminal unit, a terminal station, a terminal apparatus, a wireless communication device, a user agent, or a user apparatus.

For example, the terminal in embodiments of this application may be a mobile phone (mobile phone), a personal digital assistant (personal digital assistant, PDA) computer, a laptop computer (laptop computer), a tablet computer (Pad), an uncrewed aerial vehicle, a computer that has a wireless transceiver function, a machine type communication (machine type communication, MTC) terminal, a virtual reality (virtual reality, VR) terminal, an augmented reality (augmented reality, AR) terminal, an internet of things (internet of things, IoT) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal (for example, a game console, a smart television, a smart speaker, a smart refrigerator, or fitness equipment) in a smart home (smart home), a vehicle-mounted terminal, or a road side unit (road side unit, RSU) that has a terminal function.

### (2) Network node

The network node is a network device (for example, an access network device or a radio access network device) that is located on a network side of the foregoing communication system and that has a wireless transceiver function, or may be a component (for example, a chip or a circuit) in the network device. In this embodiment of this application, "the network node is a network device" is used as an example for description.

For example, the network node in embodiments of this application may be an access point (access point, AP) in a Wi-Fi system, such as a home gateway, a router, a server, a switch, or a bridge; a base station, an evolved NodeB (evolved NodeB, eNB), a radio network controller (radio network controller, RNC), a base station controller (base station controller, BSC), a base transceiver station (base transceiver station, BTS), a home base station, a baseband unit (baseband unit, BBU), a wireless relay node, a wireless backhaul node, or the like; or may be a next generation NodeB (next generation NodeB, gNB) in a 5G system, a network node constituting a gNB, for example, an RSU having a base station function, or the like; or may be a satellite or a base station in various forms in the future.

### (3) Wireless bearer

Communication between the terminal and the network node is performed in accordance with a specific protocol layer structure. For example, a control plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical (physical, PHY) layer. A user plane protocol layer structure may include a PDCP layer, an RLC layer, a MAC layer, and a physical layer. In a possible implementation, a service data adaptation protocol (service data adaptation protocol, SDAP) layer may be further included above the PDCP layer. The SDAP layer, the PDCP layer, the RLC layer, the MAC layer, and the physical layer may be collectively referred to as an access stratum. For detailed descriptions of the foregoing protocol layers, refer to related technical specifications of the 3rd generation partnership project (3rd generation partnership project, 3GPP).

When user plane data transmission is performed between the terminal and the network node, data needs to pass through a user plane protocol layer, for example, through the SDAP layer, the PDCP layer, the RLC layer, the MAC layer, and the physical layer. For example, at least one data radio bearer (data radio bearer, DRB) is established between the terminal and the network node for data transmission. Each DRB may correspond to one functional entity set. For example, the functional entity set may include one PDCP layer entity, at least one RLC layer entity corresponding to the PDCP layer entity, at least one MAC layer entity corresponding to the at least one RLC layer entity, and at least one physical layer entity corresponding to the at least one MAC layer entity.

When control plane signaling transmission is performed between the terminal and the network node, signaling needs to pass through a control plane protocol layer, for example, through the RRC layer, the PDCP layer, the RLC layer, the MAC layer, and the physical layer. For example, at least one signaling radio bearer (signaling radio bearer, SRB) is established between the terminal and the network node for signaling transmission. Each SRB may correspond to one functional entity set. For details, refer to descriptions of the DRB. The SRB and the DRB may be collectively referred to as a radio bearer (radio bearer, RB).

### (4) CU-DU split architecture

For example, in some possible network structures, the network node may include one or more central units (central unit, CU) and one or more distributed units (distributed unit, DU). A plurality of DUs may be centrally controlled by one CU. Such an architecture may be referred to as a CU-DU split architecture. For example, an interface between the CU and the DU may be referred to as an F1 interface. A control plane (control plane, CP) interface may be an F1-C interface, and a user plane (user plane, UP) interface may be an F1-U interface.

Processing functions of the CU and the DU may be divided based on protocol layers of a wireless network. For example, as shown in FIG. 2, functions of a PDCP layer and protocol layers above the PDCP layer are set on the CU, and functions of protocol layers (for example, an RLC layer and a MAC layer) below the PDCP layer are set on the DU. It may be understood that division of the processing functions of the CU and the DU based on the protocol layers is merely an example, and division may alternatively be performed in another manner. For example, functions of protocol layers above the RLC layer are set on the CU, and functions of the RLC layer and protocol layers below the RLC layer are set on the DU. For another example, division may be performed in a manner in which the CU or the DU has functions of more protocol layers. For another example, division may be performed in a manner in which the CU or the DU has some processing functions of the protocol layers. This is not limited in embodiments of this application.

It may be understood that a quantity of network nodes and a quantity of terminals included in the communication system are not limited in embodiments of this application. In addition to the network node and the terminal, the communication system may further include another device or network element, for example, a core network element or a relay device. This is not limited in embodiments of this application.

The following first explains and describes related terms in embodiments of this application. Unless otherwise specified, these explanations are intended to support meanings of related terms, for ease of understanding of embodiments of this application, and should not be considered as a strict limitation on related terms in the protection scope claimed in this application.

### (1) Cell handover

Cell handover (switch or handover) may be classified into two types. One is cell handover implemented based on a layer 1/a layer 2, which may be referred to as layer 1/layer 2 handover or layer 1/layer 2 triggered mobility (L1/L2 triggered mobility, LTM) handover. The other is cell handover implemented based on a layer 3, which may be referred to as layer 3 handover (L3 handover) or legacy handover. The layer 1 may be a physical layer, the layer 2 may be any one or more of a PDCP layer, an RLC layer, and a MAC layer, and the layer 3 may be an RRC layer. Because the layer 1 and the layer 2 are lower than the RRC layer (the layer 3) in a protocol stack, the layer 1/layer 2 handover may also be referred to as low-layer handover, bottom-layer handover, or lower-layer handover. A name of a specific handover technology is not limited in this application. In this embodiment of this application, the LTM handover is used as an example for description.

### (2) Cell handover scenario

When a terminal is handed over between different cells, there may be a plurality of specific handover scenarios, for example, a scenario 1 and a scenario 2.

**Scenario 1**: The terminal is handed over from a cell managed by a network node 1 to a cell managed by a network node 2. In this case, the network node 1 may be referred to as a source network node, and the network node 2 may be referred to as a target network node. In other words, a source cell and a target cell of the terminal belong to different network nodes. Cell handover associated with the scenario 1 may be referred to as inter-gNB (inter-gNB) handover.

For example, when a CU-DU split architecture is used (for example, one network node includes one CU and a plurality of DUs, the plurality of DUs are centrally controlled by the CU, and each of the plurality of DUs may manage one or more cells), a network node 1 includes a CU 1 and a DU 1, the CU 1 controls the DU 1, a network node 2 includes a CU 2 and a DU 2, and the CU 2 controls the DU 2. The foregoing scenario 1 may alternatively be described as follows: The terminal is handed over from a cell managed by the DU1 to a cell managed by the DU2, that is, a source cell and a target cell of the terminal belong to different CUs. Therefore, the inter-gNB handover may alternatively be understood as inter-CU (inter-CU) handover.

**Scenario 2**: A terminal is handed over from a cell managed by a network node to another cell managed by the network node, that is, a source cell and a target cell of the terminal belong to a same network node. Cell handover associated with the scenario 2 is an intra-gNB (intra-gNB) handover.

For example, when a CU-DU split architecture is used (for example, a network node includes a CU, a CU-controlled DU 1, and a CU-controlled DU 2), the foregoing scenario 2 may also be referred to as an intra-CU (intra-CU) handover. For example, the intra-CU handover includes intra-DU (intra-DU) handover and inter-DU (inter-DU) handover. The intra-DU handover means that the terminal is handed over from a cell managed by a DU (for example, a DU 1 or a DU 2) to another cell managed by the DU, that is, a source cell and a target cell of the terminal belong to a same DU. The inter-DU handover means that the terminal is handed over from a cell managed by a DU 1 to a cell managed by a DU 2, that is, a source cell and a target cell of the terminal belong to different DUs controlled by a same CU.

### (3) Multi-connectivity

In the communication system shown in FIG. 1, such simultaneous connections are referred to as multi-connectivity. Such simultaneously connections to two network nodes are referred to as dual-connectivity (dual-connectivity, DC). In other words, the multi-connectivity may be the dual-connectivity, or may mean that the terminal is simultaneously connected to more than two network nodes. One of a plurality of network nodes (a network node having control plane signaling exchanging with a core network) is referred to as a master node, and other network nodes are referred to as secondary nodes. A cell group that is managed by the master node and that provides a service for the terminal is referred to as a master cell group (master cell group, MCG), and a cell group that is managed by the secondary node and that provides a service for the terminal is referred to as a secondary cell group (secondary cell group, SCG). In addition, the plurality of network nodes herein may be base stations belonging to a same radio access technology (radio access technology, RAT) (for example, all base stations are 4G base stations, or all base stations are 5G base stations), or may be base stations belonging to different RATs (for example, one base station is a 4G base station, and the other is a 5G base station). In this embodiment of this application, an example in which the plurality of network nodes are all 5G base stations (namely, NR-DC) is used for description.

In a multi-connectivity scenario, a bearer with a PDCP terminated on a master node may be referred to as an MN terminated bearer (MN terminated RB). To be specific, downlink data directly reaches the master node from a core network, is processed by the PDCP of the master node (for example, may be processed first by an SDAP and then by the PDCP), and then is sent to the terminal via RLC/MAC. Uplink data is processed by the PDCP of the master node (for example, may be processed first by the PDCP and then by the SDAP), and then is sent to the core network. Similarly, a bearer with a PDCP terminated on a secondary node may be referred to as an SN terminated bearer (SN terminated RB). To be specific, downlink data directly reaches the secondary node from a core network, is processed by the PDCP of the secondary node (for example, may be processed first by an SDAP and then by the PDCP), and then is sent to the terminal via RLC/MAC. Uplink data is processed by the PDCP of the secondary node (for example, may be processed first by the PDCP and then by the SDAP), and then is sent to the core network.

It may be understood that in this embodiment of this application, multi-connectivity (for example, dual-connectivity) is described by using an example in which the terminal is connected to two network nodes, one network node is a master node, and the other network node is a secondary node. When the terminal is connected to a single network node, the node may serve as both a master node and a secondary node, and both a master cell group and a secondary cell group are configured.

A dual-connectivity scenario is used as an example. After the terminal establishes a connection to a network node (namely, a master node), the master node may add a secondary node for the terminal by using a secondary node addition procedure, to establish dual-connectivity. The master node and the secondary node perform data transmission with the terminal by using the dual-connectivity. Further, if the master node of the terminal undergoes handover, a possible implementation is as follows: The source master node of the terminal sends a secondary node release request to the secondary node, to indicate the secondary node to stop transmitting data to the terminal. After the terminal is successfully handed over to a target master node, the terminal first performs data transmission with the target master node. Then, after the target master node adds the secondary node for the terminal by performing a secondary node addition procedure and new dual-connectivity is established, the target master node and the secondary node perform data transmission with the terminal by using the new dual-connectivity.

However, in the foregoing manner, when the master node of the terminal undergoes handover, the target master node needs to perform the secondary node addition procedure to add the secondary node for the terminal, to recover data transmission of the secondary node. Consequently, latency in recovering the data transmission of the secondary node is relatively large, and service interruption may be caused.

Based on this, related implementations of an inter-gNB handover scenario (or an inter-CU handover scenario) are studied in embodiments of this application. For example, an embodiment of this application provides a communication method, to rapidly recover data transmission of a secondary node, thereby avoiding service interruption. The communication method provided in this embodiment of this application relates to a terminal side apparatus and at least one network node (for example, a first node, a second node, a third node, and a fourth node). The "terminal side apparatus" may be a terminal, or may be a component in the terminal, for example, a chip or a chip system disposed in the terminal. In this embodiment of this application, "the terminal side apparatus is a terminal" is used as an example for description. The "network node" may be a network device, or may be a component in the network device, for example, a chip or a chip system disposed in the network device.

With reference to specific embodiments, the following describes in detail the communication method provided in embodiments of this application.

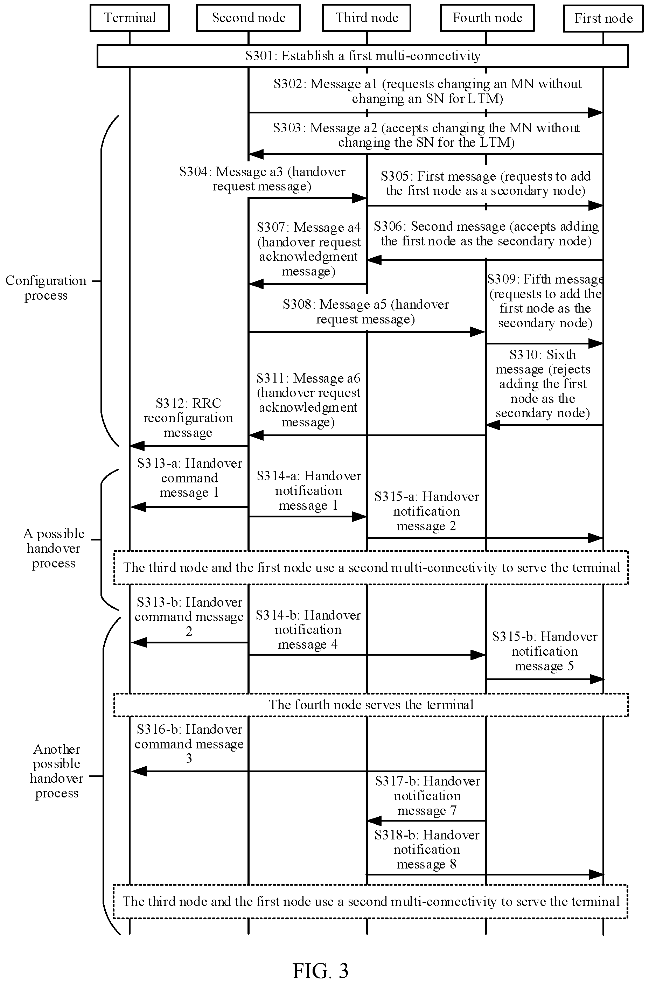

**FIG. 3** is a schematic flowchart corresponding to a communication method according to an embodiment of this application. As shown in FIG. 3, the procedure may include the following steps.

**S301**: Establish a first multi-connectivity used to serve a terminal, where a master node of the first multi-connectivity is a second node, and a secondary node of the first multi-connectivity is a first node.

After the first multi-connectivity is established, the second node and the first node use the first multi-connectivity to serve the terminal.

For example, after the terminal establishes single connectivity to the second node, the second node may complete establishment of the first multi-connectivity by using a secondary node addition procedure. The establishment of the first multi-connectivity specifically includes: The second node sends a secondary node addition request (SN addition request) message to the first node, and the secondary node addition request message is used to request to add the first node as a secondary node of the first multi-connectivity of the terminal. Correspondingly, after receiving the secondary node addition request message, the first node sends a secondary node addition request acknowledge (SN addition request acknowledge) message to the second node. The secondary node addition response message is used to accept adding the first node as the secondary node of the first multi-connectivity of the terminal, the secondary node addition response message includes configuration information of the secondary node (for ease of description, referred to as a first configuration), and the first configuration is used for a secondary cell group of the first multi-connectivity. In addition, the first node stores a context of the terminal (which may be referred to as an SN context of the terminal). The SN context of the terminal includes the first configuration, and optionally, further includes other possible information. This is not specifically limited. After receiving the secondary node addition request acknowledge message, the second node sends an RRC reconfiguration message to the terminal, where the RRC reconfiguration message includes the first configuration, so that the terminal can establish a connection to the secondary node based on the first configuration, thereby completing establishment of the first multi-connectivity. After the first multi-connectivity is established, the second node and the first node use the first multi-connectivity to serve the terminal, that is, the second node and the first node transmit uplink data and/or downlink data of the terminal in a multi-connectivity manner.

Optionally, the secondary node addition request message includes identification information of an available SN terminated RB. Correspondingly, when the first node accepts adding the first node as the secondary node of the first multi-connectivity, the first node may select one or more pieces of identification information from the identification information of the available SN terminated RB, and establish an SN terminated RB. For example, the identification information of the available SN terminated RB includes {RB identifier 0, RB identifier 1, RB identifier 2, RB identifier 3}. The first node may select {RB identifier 0, RB identifier 1} from the identification information of the available SN terminated RB, and establish an SN terminated RB0 and an SN terminated RB1. An identifier of the SN terminated RB0 is the RB identifier 0, and an identifier of the SN terminated RB1 is the RB identifier 1. In this case, the RB identifier 0 and the RB identifier 1 are used RB identifiers, and the RB identifier 2 and the RB identifier 3 are unused RB identifiers. An RB identified by the used RB identifier may be referred to as a used RB, that is, the SN terminated RB0 and the SN terminated RB1 are used RBs.

**S302**: The second node sends a message a1 to the first node, where the message a1 is used to request to change an MN without changing an SN for LTM. Correspondingly, the first node receives the message a1.

For example, the second node determines, based on a measurement result reported by the terminal, whether to initiate LTM configuration. When it is determined to initiate the LTM configuration, the second node sends the message a1 to the first node.

For example, the message a1 includes information about changing an MN without changing an SN for the LTM, and optionally, further includes second identification information. The second identification information is associated with the first configuration, and the second identification information is identification information that is recommended by the second node and that is associated with the SN context (for example, the first configuration) of the terminal. Optionally, the message a1 further includes identification information of at least one MN, and the identification information of the at least one MN indicates that no SN changes when a handover-to target node is one of the at least one MN. The at least one MN may include a candidate master node for handover of the terminal, for example, a third node and a fourth node in the following.

In this embodiment of this application, "not changing an SN" may be understood as keeping the SN of the terminal, or keeping the context of the terminal in the SN. "Changing an MN without changing an SN for the LTM" may be understood as handover of changing the MN without changing the SN.

**S303**: The first node sends a message a2 (namely, a fourth message) to the second node, where the message a2 is used to accept changing an MN without changing an SN for the LTM. Correspondingly, the second node receives the message a2.

For example, after receiving the message a1, the first node sends, when accepting changing an MN without changing an SN for the LTM, the message a2 to the second node based on the "information about changing an MN without changing an SN for the LTM" included in the message a1.

For example, the message a2 includes first identification information, and the first identification information is associated with the SN context (for example, the first configuration) of the terminal. The first identification information is different from the second identification information. To be specific, the first node does not accept the second identification information recommended by the second node, and reallocates new identification information (namely, the first identification information) associated with the SN context (for example, the first configuration) of the terminal. Alternatively, the first identification information may be the same as the second identification information. To be specific, the first node accepts the second identification information recommended by the second node. In this case, the message a2 may not include the first identification information. It may be understood that, in another possible embodiment, the message a1 may not include the second identification information, that is, the second node does not need to recommend, to the first node, the identification information associated with the first configuration.

Optionally, the message a2 further includes identification information of the used RB and/or quality of service (quality of service, QoS) flow information mapped to the used RB. The used RB terminates at the first node, that is, the used RB is an SN terminated RB. For example, used RBs include an SN terminated RB0 and an SN terminated RB1, and the identification information of the used RB includes an RB identifier 0 and an RB identifier 1. The QoS flow information mapped to the used RB is, for example, a QoS flow identifier (QoS flow ID, QFI) mapped to the used RB.

For example, the message a1 may be a secondary node modification request (SN modification request) message, and the message a2 may be a secondary node modification request acknowledge (SN modification request acknowledge) message.

S302 and S303 are optional steps, that is, S302 and S303 may not be performed. For example, in S302 and S303, the first node and the second node determine, through negotiation, the identification information associated with the SN context (for example, the first configuration) of the terminal. When the identification information associated with the SN context (for example, the first configuration) of the terminal is predefined identification information or other identification information (for example, the identification information of the terminal is reused), S302 and S303 may not be performed.

**S304:** The second node sends a message a3 to the third node. For example, the message a3 is a handover request (handover request) message. Correspondingly, the third node receives the handover request message.

For example, when the second node determines to initiate LTM configuration, the second node sends the handover request message to the third node if determining that a first cell is used as a candidate master cell for handover of the terminal (the first cell belongs to the third node, that is, it is determined that the third node is used as the candidate master node for handover of the terminal).

For example, the message a3 includes identification information of the first cell (for example, a cell global identifier (cell global identifier, CGI) of the first cell), first identification information, and identification information of the secondary node (for example, an ID of the secondary node, namely, an ID of the first node). The first identification information and the identification information of the secondary node are used to trigger the third node to initiate SN addition without changing an SN, and the identification information of the first cell is used to request the third node to configure the first cell as the candidate master cell for handover of the terminal. Optionally, the message a3 further includes at least one of an identifier of an MN terminated RB, QoS flow information mapped to the MN terminated RB, an identifier of an SN terminated RB, or QoS flow information mapped to the SN terminated RB.

**S305:** The third node sends a first message to the first node, where the first message is used to request to add the first node as a secondary node of a second multi-connectivity of the terminal (that is, request to perform SN addition for the third node without changing an SN), and a master node of the second multi-connectivity is the third node. Correspondingly, the first node receives the first message.

For example, in response to the handover request message, the third node performs admission control, determines whether to use the third node as a candidate master node of the terminal, and determines whether to add the first node as the secondary node of the second multi-connectivity of the terminal. If the third node determines to serve as the candidate master node of the terminal and determines to add the first node as the secondary node of the second multi-connectivity of the terminal, the third node sends the first message to the first node, and accepts a handover request of the handover request message. Alternatively, if the third node determines to serve as the candidate master node of the terminal and determines not to add the first node as the secondary node of the second multi-connectivity of the terminal, the third node does not need to send the first message to the first node, and accepts the handover request of the handover request message. Alternatively, if the third node determines not to serve as the candidate master node of the terminal, the third node does not need to send the first message to the first node, and rejects the handover request of the handover request message.

For example, "the third node determines to serve as the candidate master node of the terminal, and determines to add the first node as the secondary node of the second multi-connectivity of the terminal", and a multi-connectivity currently serving the terminal is the first multi-connectivity. In other words, when the third node sends the first message to the first node, the multi-connectivity serving the terminal is the first multi-connectivity. The second multi-connectivity is a candidate multi-connectivity serving the terminal, that is, a multi-connectivity that may serve the terminal in the future (after the third node sends the first message to the first node).

For example, the first message includes the first identification information, that is, an SN corresponding to a source master node (namely, the second node) is the same as that corresponding to a candidate master node (namely, the third node). Further, optionally, the first message further indicates that the SN addition for the third node is performed without changing the SN based on an LTM handover request of the master node.

**S306**: The first node sends a second message to the third node in response to the first message, where the second message is used to accept adding the first node as the secondary node of the second multi-connectivity. Correspondingly, the third node receives the second message.

For example, in response to the first message, the first node sends the second message to the third node when determining to accept adding the first node as the secondary node of the second multi-connectivity.

The second message includes configuration information of the secondary node (for ease of description, referred to as a second configuration), and the second configuration corresponds to the first cell. The second configuration may be the same as the first configuration. In other words, the first configuration is further used for a secondary cell group of the second multi-connectivity. Alternatively, the second configuration is different from the first configuration, that is, an SN configuration corresponding to the candidate master cell is different from the first configuration. In this case, the SN context of the terminal further includes the second configuration, that is, the SN context of the terminal includes the first configuration, and further includes the SN configuration corresponding to the candidate master cell (for example, the second configuration corresponding to the first cell). It may be understood that SN configurations corresponding to different candidate master cells may be the same or different. This is not specifically limited.

Further, the third node may send the second configuration to the second node by using a message a4 in the following (refer to S307), and then the second node sends the second configuration to the terminal by using an RRC reconfiguration message (refer to S312). After receiving the second configuration, the terminal may establish a connection to the secondary node based on the second configuration, to complete establishment of the second multi-connectivity. It may be understood that the second multi-connectivity is the candidate multi-connectivity serving the terminal. In other words, although the second multi-connectivity is established, the second multi-connectivity is not used to serve the terminal.

Optionally, the second message includes first information, the first information is used to listen to a control channel of the first node after the terminal determines to use the second multi-connectivity to serve the terminal, and the first information may be included in the second configuration. For example, the first information indicates that an initial status of the secondary cell group of the second multi-connectivity is an activated state. Based on the received first information, the terminal may listen to the control channel of the first node after determining to use the second multi-connectivity to serve the terminal. In addition, in another example, if the first information indicates that the initial status of the secondary cell group of the second multi-connectivity is a deactivated state, the terminal needs to wait for an indication from the master node of the second multi-connectivity after determining to use the second multi-connectivity to serve the terminal (for example, when the master node of the second multi-connectivity activates the secondary cell group of the second multi-connectivity, the master node of the second multi-connectivity may send the indication to the terminal), and listens to the control channel of the first node after receiving the indication.

For example, the first message is the secondary node addition request message, and the second message is the secondary node addition request acknowledge message.

**S307**: The third node sends the message a4 to the second node. For example, the message a4 is a handover request acknowledge (handover request acknowledge) message. Correspondingly, the second node receives the message a4.

For example, the message a4 includes an LTM configuration of the first cell and the configuration information of the secondary node (namely, the second configuration). The LTM configuration of the first cell includes at least one of a cell group (cell group) configuration (for example, group identification information corresponding to the first cell), a channel state information (channel state information, CSI) resource configuration, a transmission configuration indication (transmission configuration indication, TCI) state configuration, or a CSI report configuration. This is not specifically limited.

Optionally, the message a4 further includes a candidate MN terminated RB configuration (namely, a third node terminated RB configuration). For example, for the MN terminated RB, the third node reconfigures the MN terminated RB as a third node terminated RB. For example, identification information of the third node terminated RB may be the same as identification information of the MN terminated RB, and QoS flow information mapped to the third node terminated RB may be the same as the QoS flow information mapped to the MN terminated RB.

**S308**: The second node sends a message a5 to the fourth node, where the message a5 is a handover request message. Correspondingly, the fourth node receives the message a5.

For example, when the second node determines to initiate LTM configuration, the second node sends the message a5 to the fourth node if determining that the second cell is used as a candidate master cell for handover of the terminal (the second cell belongs to the fourth node, that is, it is determined that the fourth node is used as the candidate master node for handover of the terminal).

For example, the message a5 includes identification information of the second cell, the first identification information, and the identification information of the secondary node (for example, the ID of the secondary node, namely, the ID of the first node). The first identification information and the identification information of the secondary node are used to trigger the fourth node to initiate SN addition without changing an SN. The identification information of the second cell is used to request the fourth node to configure the second cell as the candidate master cell for handover of the terminal. Optionally, the message a5 further includes at least one of an identifier of an SN terminated RB, QoS flow information mapped to the SN terminated RB, an identifier of an MN terminated RB, or QoS flow information mapped to the MN terminated RB.

**S309**: The fourth node sends a fifth message to the first node, where the fifth message is used to request to add the first node as a secondary node of a third multi-connectivity of the terminal (that is, request to perform SN addition for the fourth node without changing an SN), and a master node of the third multi-connectivity is the fourth node. Correspondingly, the first node receives the fifth message.

For example, in response to the message a5, the fourth node performs admission control, determines whether to use the fourth node as a candidate master node of the terminal, and determines whether to add the first node as the secondary node of the third multi-connectivity of the terminal. If the fourth node determines to serve as the candidate master node of the terminal, and determines to add the first node as the secondary node of the third multi-connectivity of the terminal, the fourth node sends the fifth message to the first node, and accepts a handover request of a handover request message. Alternatively, if the fourth node determines to serve as the candidate master node of the terminal, and determines not to add the first node as the secondary node of the third multi-connectivity of the terminal, the fourth node does not need to send the fifth message to the first node, and accepts the handover request of the handover request message. Alternatively, if the fourth node determines not to serve as the candidate master node of the terminal, the fourth node does not need to send the fifth message to the first node, and rejects the handover request of the handover request message.

For example, "the fourth node determines to serve as the candidate master node of the terminal, and determines to add the first node as the secondary node of the third multi-connectivity of the terminal", and a multi-connectivity currently serving the terminal is the first multi-connectivity. In other words, when the fourth node sends the first message to the first node, the multi-connectivity serving the terminal is the first multi-connectivity. The third multi-connectivity is a candidate multi-connectivity serving the terminal, that is, a multi-connectivity that may serve the terminal in the future (after the fourth node sends the first message to the first node).

For example, the fifth message includes the first identification information, that is, an SN corresponding to a source master node (namely, the second node) is the same as that corresponding to a candidate master node (namely, the fourth node). Further, optionally, the fifth message further indicates that the SN addition for the fourth node is performed without changing the SN based on an LTM handover request of the master node.

**S310**: In response to the fifth message, the first node sends a sixth message to the fourth node, where the sixth message is used to reject adding the first node as the secondary node of the third multi-connectivity (that is, reject not changing an SN for the fourth node). Correspondingly, the fourth node receives the sixth message.

For example, in response to the fifth message, the first node sends the sixth message to the fourth node when determining to reject adding the first node as the secondary node of the third multi-connectivity.

For example, the fifth message is a secondary node addition request message, and the sixth message is a secondary node addition request reject (SN addition request reject) message.

**S311**: The fourth node sends a message a6 to the second node. For example, the message a6 is a handover request acknowledge message. Correspondingly, the second node receives the message a6.

For example, the message a6 includes an LTM configuration of the second cell. For the LTM configuration of the second cell, refer to descriptions of the LTM configuration of the first cell.

Optionally, the message a6 further includes a candidate MN terminated RB configuration (namely, a fourth node terminated RB configuration). Specifically, because the fourth node cannot perform multi-connectivity with the first node, a bearer termination change needs to be performed to avoid data loss. For the SN terminated RB, the fourth node determines the bearer termination change (bearer termination change), and configures the SN terminated RB (for example, the SN terminated RB0 and the SN terminated RB1) as a fourth node terminated RB (that is, changes a node at which the SN terminated RB terminates to the fourth node), to determine the fourth node terminated RB configuration. The configuration includes an identifier of the fourth node terminated RB, and the identifier of the fourth node terminated RB is the same as the identifier of the SN terminated RB. In addition, for the MN terminated RB, the fourth node reconfigures the MN terminated RB as the fourth node terminated RB.

**S312**: The second node sends an RRC reconfiguration message to the terminal. Correspondingly, the terminal receives the RRC reconfiguration message.

For example, the RRC reconfiguration message includes the LTM configuration of the first cell and the second configuration (that is, content included in the message a4), and further includes the LTM configuration of the second cell (that is, content included in the message a6). The RRC reconfiguration message may further include other possible information, for example, the third node terminated RB configuration and the fourth node terminated RB configuration. This is not specifically limited.

Optionally, after receiving the RRC reconfiguration message, the terminal may send an RRC reconfiguration complete message to the second node.

It may be understood that S302 to S312 may be understood as a configuration process, and the configuration process is described by using "the first cell (the third node)" and "the second cell (the fourth node)" as an example. In another embodiment, the configuration process includes a configuration process for the first cell, but does not include a configuration process for the second cell. Alternatively, the configuration process includes the configuration process for the second cell, but does not include the configuration process for the first cell. Alternatively, the configuration process includes the configuration processes for the first cell and the second cell, and further includes a configuration process for another cell. This is not specifically limited. In addition, not all steps involved in S301 to S312 are mandatory. For example, S305 and S306 may be separately performed, or S309 and S310 may be separately performed.

**Optionally, the method further includes S313-a to S315-a, or S313-b to S318-b.**

**S313-a**: The second node sends a handover command message 1 to the terminal. Correspondingly, the terminal receives the handover command message 1.

The handover command message 1 indicates that a master node of the terminal is switched to the third node, that is, the handover command message 1 is a handover command message of the master node. For example, the handover command message 1 indicates that the terminal is handed over to the first cell managed by the third node. In response to the handover command message 1, the terminal determines to use the second multi-connectivity for data transmission.

For example, the terminal may send a measurement report of one or more candidate cells to the second node. If the second node determines, based on the measurement report of the one or more candidate cells, that the terminal is to be handed over to the first cell managed by the third node, the second node sends the handover command message 1 to the terminal.

The handover command message 1 is a MAC control element (control element, CE), the handover command message 1 includes a configuration identifier of the first cell, and the first cell is a target master cell for handover. Optionally, the handover command message 1 further includes identification information of a TCI status, so that the terminal receives scheduling information on a corresponding beam of the first cell based on the identification information of the TCI status.

**S314-a**: The second node sends a handover notification message 1 to the third node. Correspondingly, the third node receives the handover notification message 1.

For example, the handover notification message 1 indicates that the handover command message of the master node is sent to the terminal, and the handover command message indicates that the master node of the terminal is switched to the first cell managed by the third node.

The handover notification message 1 includes the identification information of the first cell, and further includes the identification information of the TCI status, so that the third node sends the scheduling information on the corresponding beam of the first cell based on the identification information of the TCI status. Optionally, the handover notification message 1 further includes the identification information of the secondary node (namely, the identification information of the first node) and the first identification information.

**S315-a**: The third node sends a third message to the first node. For example, the third message is a handover notification message 2. Correspondingly, in response to the handover notification message 2, the first node determines to use the second multi-connectivity to serve the terminal.

Herein, that the first node determines to use the second multi-connectivity to serve the terminal may mean that the first node determines that the first node continues to serve the terminal. That the first node continues to serve the terminal may mean that the first node continues to keep serving the terminal. To be specific, before the first node receives the handover notification message 2, the first node serves the terminal, and in response to the handover notification message 2, the first node further continues to keep serving the terminal.

For example, the third node sends the handover notification message 2 to the first node based on the identification information of the secondary node (namely, the identification information of the first node) and the first identification information. The handover notification message 2 indicates that the master node of the terminal is switched to the third node (that is, the terminal is handed over to the first cell managed by the third node). The handover notification message 2 includes the first identification information and the identification information of the first cell, the first identification information is used by the first node to identify the SN context of the terminal, and the identification information of the first cell is used by the first node to identify the second configuration corresponding to the first cell in the SN context of the terminal. For example, different candidate master cells correspond to different SN configurations. Therefore, identification information of a target master cell for current handover (namely, the identification information of the first cell) needs to be provided to the first node, so that the first node determines an SN configuration corresponding to the target master cell for the current handover.

Optionally, the handover notification message 2 further includes cause information, and the cause information indicates that a cause for sending the handover notification message 2 is occurrence of LTM handover on the master node. For example, the first message above is based on an LTM handover request of the master node and is for the third node without changing the SN. Therefore, when the handover notification message 2 includes the reason information that the LTM handover occurs on the master node, the first node may determine a corresponding SN configuration.

In addition, in a possible implementation (Implementation 1), when the second configuration includes the first information, if the first information indicates that an initial status of the secondary cell group of the second multi-connectivity is an activated state, the first node may activate the secondary cell group of the second multi-connectivity after determining to use the second multi-connectivity to serve the terminal. When the second configuration includes the first information, if the first information indicates that the initial status of the secondary cell group of the second multi-connectivity is a deactivated state, the first node may deactivate the secondary cell group of the second multi-connectivity after determining to use the second multi-connectivity to serve the terminal. The first node manages the secondary cell group of the second multi-connectivity. When the secondary cell group of the second multi-connectivity is in an active state, the first node may perform data transmission with the terminal on the secondary cell group of the second multi-connectivity. When the secondary cell group of the second multi-connectivity is in a deactivated state, the first node cannot perform data transmission with the terminal on the secondary cell group of the second multi-connectivity.

In still another possible implementation (Implementation 2), the third node may further send an activation request (for example, the handover notification message 2 includes the activation request) to the first node, and the activation request is used to request to activate the secondary cell group of the second multi-connectivity. Correspondingly, after determining to use the second multi-connectivity to serve the terminal, the first node activates the secondary cell group of the second multi-connectivity in response to the activation request. Alternatively, the third node may further send a deactivation request (for example, the handover notification message 2 includes the deactivation request) to the first node, and the deactivation request is used to deactivate the secondary cell group of the second multi-connectivity. Correspondingly, after determining to use the second multi-connectivity to serve the terminal, the first node deactivates the secondary cell group of the second multi-connectivity in response to the deactivation request. In this way, the third node can activate or deactivate the secondary cell group of the second multi-connectivity based on an actual requirement. For example, when a volume of data that needs to be transmitted is relatively large, the third node may activate the secondary cell group of the second multi-connectivity, to improve transmission efficiency. When a volume of data that needs to be transmitted is relatively small, the third node may deactivate the secondary cell group of the second multi-connectivity.

It should be noted that, if the first configuration is the same as the second configuration, that is, the secondary cell group of the first multi-connectivity and the secondary cell group of the second multi-connectivity may be understood as a same secondary cell group, in this case, before the first node activates the secondary cell group of the second multi-connectivity, if the secondary cell group of the first multi-connectivity is in an activated state, "the first node activates the secondary cell group of the second multi-connectivity" may be understood as "the first node keeps an activated state of the secondary cell group of the second multi-connectivity", or "the first node activates an activation state of the secondary cell group of the second multi-connectivity again". Similarly, before the first node deactivates the secondary cell group of the second multi-connectivity, if the secondary cell group of the first multi-connectivity is in a deactivated state, "the first node deactivates the secondary cell group of the second multi-connectivity" may be understood as "the first node keeps a deactivated state of the secondary cell group of the second multi-connectivity", or "the first node deactivates the secondary cell group of the second multi-connectivity again". In other words, "activating X" is used as an example. "Activating X" in this embodiment of this application may refer to performing an operation of activating X, or may refer to keeping an active state of X.

In still another possible implementation (Implementation 3), assuming that the first configuration is the same as the second configuration, that is, the secondary cell group of the first multi-connectivity and the secondary cell group of the second multi-connectivity may be understood as a same secondary cell group, the second node may send current status information of the secondary cell group to the third node. For example, the handover notification message 1 includes the current status information of the secondary cell group. Correspondingly, the third node may learn a current status of the secondary cell group based on the current status information of the secondary cell group. Further, when the third node determines that the secondary cell group needs to be activated, if the current status of the secondary cell group is an activated state, the activation request does not need to be sent; or if the current status of the secondary cell group is a deactivated state, the activation request is sent. When the third node determines that the secondary cell group needs to be deactivated, if the current status of the secondary cell group is a deactivated state, the deactivation request does not need to be sent; or if the current status of the secondary cell group is an activated state, the deactivation request is sent. In comparison with Implementation 2, in Implementation 3, because the second node sends the current status information of the secondary cell group to the third node, the third node may send the activation request or the deactivation request in a targeted manner based on the current status information of the secondary cell group.

In Implementation 2 or Implementation 3, when the third node sends the activation request to the first node, the third node may send an indication to the terminal, to indicate the terminal to listen to the control channel of the first node. When the third node sends the deactivation request to the first node, the third node may send an indication to the terminal, to indicate the terminal to stop listening to the control channel of the first node.

In addition, S315-a may be replaced with S315-a'. S315-a': The second node sends a third message to the first node. For example, the third message is a handover notification message 3. Correspondingly, in response to the handover notification message 3, the first node determines to use the second multi-connectivity to serve the terminal. The handover notification message 3 includes the first identification information and the identification information of the first cell. For functions of the first identification information and the identification information of the first cell, refer to descriptions of the handover notification message 2.

**S313-b**: The second node sends a handover command message 2 to the terminal. Correspondingly, the terminal receives the handover command message 2.

The handover command message 2 indicates that the master node of the terminal is switched to the fourth node, that is, the handover command message 2 is a handover command message of the master node. For example, the handover command message 2 indicates that the terminal is handed over to the second cell managed by the fourth node. For the handover command message 2, refer to related descriptions of the handover command message 1.

**S314-b**: The second node sends a handover notification message 4 to the fourth node. Correspondingly, the fourth node receives the handover notification message 4.

For example, the handover notification message 4 indicates that the handover command message of the master node is sent to the terminal, and the handover command message indicates that the master node of the terminal is switched to the second cell managed by the fourth node.

The handover notification message 4 includes the identification information of the second cell, and optionally further includes the identification information of the TCI status, so that the fourth node sends scheduling information on a corresponding beam of the second cell based on the identification information of the TCI status. Optionally, the handover notification message 4 further includes the identification information of the secondary node (namely, the identification information of the first node) and the first identification information.

**S315-b**: The fourth node sends a handover notification message 5 to the first node. Correspondingly, the first node receives the handover notification message 5.

For example, the fourth node sends the handover notification message 5 to the first node based on the identification information of the secondary node (namely, the identification information of the first node) and the first identification information that are in the handover notification message 4. The handover notification message 5 indicates that the master node of the terminal is switched to the fourth node (that is, the terminal is handed over to the second cell managed by the fourth node). The handover notification message 5 includes the first identification information and the identification information of the second cell. Correspondingly, after the first node receives the handover notification message 5, because an SN configuration corresponding to the second cell does not exist in the SN context of the terminal, the first node deactivates the secondary cell group managed by the first node (for example, if the secondary cell group of the first multi-connectivity is in an activated state before the handover notification message 5 is received, the secondary cell group of the first multi-connectivity may be deactivated).

In addition, S315-b may be replaced with S315-b'. S315-b': The second node sends a handover notification message 6 to the first node. Correspondingly, the first node receives the handover notification message 6. The handover notification message 6 includes the first identification information and the identification information of the second cell.

**S316-b**: The fourth node sends a handover command message 3 to the terminal. Correspondingly, the terminal receives the handover command message 3.

The handover command message 3 indicates that the master node of the terminal is switched to the third node, that is, the handover command message 3 is a handover command message of the master node. For example, the handover command message 3 indicates that the terminal is handed over to the first cell managed by the third node. For the handover command message 3, refer to related descriptions of the handover command message 1. In response to the handover command message 3, the terminal determines to use the second multi-connectivity for data transmission.

**S317-b**: The fourth node sends a handover notification message 7 to the third node. Correspondingly, the third node receives the handover notification message 7.

For example, the handover notification message 7 indicates that the handover command message of the master node is sent to the terminal, and the handover command message indicates that the master node of the terminal is switched to the first cell managed by the third node.

The handover notification message 7 includes the identification information of the first cell, and optionally further includes the identification information of the TCI status, so that the third node sends the scheduling information on the corresponding beam of the first cell based on the identification information of the TCI status. Optionally, the handover notification message 7 further includes the identification information of the secondary node (namely, the identification information of the first node) and the first identification information.

Optionally, the fourth node may further send sequence number status information of a used RB to the third node. For example, the handover notification message 7 further includes the sequence number status information of the used RB. The used RB terminates at the first node. For example, used RBs include the SN terminated RB0 and the SN terminated RB1. During a configuration stage, the fourth node configures the SN terminated RB (for example, the SN terminated RB0 and the SN terminated RB1) as the fourth node terminated RB. Therefore, the sequence number status information of the used RB may be sent by the fourth node to a handover target master node (namely, the third node), and further sent by the third node to the first node. For example, the third node sends the sequence number status information of the used RB to the first node by using a handover notification message 8 in the following. Further, the first node determines a PDCP reception window based on the sequence number status information of the used RB. Specifically, a bottom of the reception window points to a next sequence number that is not successfully received.

**S318-b**: The third node sends the third message to the first node. For example, the third message is the handover notification message 8. Correspondingly, in response to the handover notification message 8, the first node determines to use the second multi-connectivity to serve the terminal.

Herein, that the first node determines to use the second multi-connectivity to serve the terminal may mean that the first node determines that the first node continues to serve the terminal. That the first node continues to serve the terminal may mean that the first node changes from not serving the terminal to serving the terminal. To be specific, before the first node receives the handover notification message 8, the first node does not serve the terminal, and in response to the handover notification message 8, the first node changes from not serving the terminal to serving the terminal. Specifically, when the master node of the terminal is the second node, the first node and the second node use the first multi-connectivity to serve the terminal. When the master node of the terminal is switched from the second node to the fourth node, the fourth node uses single connectivity to serve the terminal, and in this case, the first node does not serve the terminal. When the master node of the terminal is switched from the fourth node to the third node, the first node and the third node use the second multi-connectivity to serve the terminal, that is, the first node continues to serve the terminal (in this case, the first node changes from not serving the terminal to serving the terminal).

For example, for a specific implementation of S318-b, refer to descriptions of S315-a.

In addition, S318-b may be replaced with S318-b'. S318-b': The fourth node sends the third message to the first node. For example, the third message is a handover notification message 9. Correspondingly, in response to the handover notification message 9, the first node determines to use the second multi-connectivity to serve the terminal. The handover notification message 9 includes the first identification information and the identification information of the first cell. For functions of the first identification information and the identification information of the first cell, refer to descriptions of the handover notification message 8.

According to the foregoing method, during the configuration stage, the candidate master node may add the first node as a secondary node of a candidate multi-connectivity, that is, a secondary node addition procedure may be performed in advance. Therefore, when the master node of the terminal undergoes handover, the target master node does not need to perform the secondary node addition procedure again (for example, activation and deactivation mechanisms of the secondary cell group are introduced in the foregoing method; and the secondary cell group may be deactivated when the target master node is switched to a master node for which multi-connectivity is not configured, and the secondary cell group may be activated when the target master node is switched to a master node for which multi-connectivity is configured, and the secondary node addition procedure does not need to be performed again). This facilitates fast recovery of data transmission of the secondary node, reduces latency in recovering the data transmission of the secondary node, and avoids service interruption.

In addition, in the foregoing method, the first node may allocate the first identification information associated with the SN context of the terminal, and send the first identification information to the second node, and the second node sends the first identification information to different candidate master nodes. In this way, regardless of whether multi-connectivity is configured for the candidate master node, the candidate master node can communicate with the first node based on the first identification information.

The following describes related implementations of secure communication between the first node and the terminal in the foregoing procedure.

### (1) Security solution 1

An initial source master node (namely, the second node) sends security information 1 to the first node. The security information 1 includes N pieces of key information, the N pieces of key information are associated with at least one candidate multi-connectivity of the terminal, and the candidate multi-connectivity is a candidate multi-connectivity serving the terminal. For example, the at least one candidate multi-connectivity includes the second multi-connectivity, and may further include another candidate multi-connectivity (for example, a fourth multi-connectivity, where a master node of the fourth multi-connectivity is the fifth node, and the first node accepts adding the first node as a secondary node of the fourth multi-connectivity). In other words, the N pieces of key information are associated with the second multi-connectivity and the fourth multi-connectivity, or the second multi-connectivity and the fourth multi-connectivity share the N pieces of key information.

The N pieces of key information may be determined based on key information of the second node. There are a plurality of specific implementations in which the second node sends the security information 1 to the first node. For example, the second node sends the security information 1 to the first node by using the message a1.

The security information 1 further includes N counters (counter). The N counters are associated with the N pieces of key information in a one-to-one manner. The counter may be replaced with another possible description. This is not specifically limited. After receiving the security information 1, the first node may send, to the second node, the N counters encapsulated in a secondary node format (for example, the N counters encapsulated in the secondary node format are included in the second configuration). Then, after receiving the N counters encapsulated in the secondary node format, the second node sends, to the terminal, the N counters encapsulated in the secondary node format.

In this way, after the master node of the terminal undergoes handover, the first node can perform secure communication with the terminal. For example, after the master node of the terminal is switched to the third node, the first node may perform secure communication with the terminal.

Specifically, **from a perspective of the first node**, the first node determines to change key information, and communicates with the terminal by using first key information. The first key information is unused key information in the N pieces of key information. For example, the first node performs PDCP re-establishment, to communicate with the terminal by using the first key information. In this embodiment of this application, the "unused key information" may be understood as a fresh key (fresh key).

There are a plurality of cases in which the first node determines to change the key information. For example, the first node determines, based on a handover notification message, that the master node of the terminal undergoes handover, and multi-connectivity is configured for the handover target master node. In this case, the first node may determine to change the key information. For another example, assuming that SN configurations corresponding to candidate master cells are the same as the first configuration, the first node may determine to change the key information when determining that the secondary cell group is handed over from a deactivated state to an activated state.

The N pieces of key information are sorted in a first order (sorted in the first order). The first key information is a first piece of unused key information in the N pieces of key information. For example, the N pieces of key information is key information 1, key information 2, and key information 3. The key information 1 is used key information (for example, when the master node of the terminal undergoes handover last time, key information used by the first node is the key information 1), and the remaining key information is unused key information. In this case, the first key information is the key information 2. The first order is an ascending order of counters corresponding to the N pieces of key information, or another possible order.

**From a perspective of the terminal**, the terminal may communicate with the first node by using a first counter. The first counter is an unused counter in the N counters, and the first counter is associated with the first key information. For example, the terminal may derive the first key information based on the first counter by using a key of the second node, and then communicate with the first node by using the first key information.

### (2) Security solution 2

The third node sends security information 2 to the first node. The security information 2 includes N pieces of key information, and the N pieces of key information are associated with the second multi-connectivity of the terminal. The N pieces of key information may be determined based on key information of the third node. There are a plurality of specific implementations in which the third node sends the security information 2 to the first node. For example, the third node sends the security information 2 to the first node by using the first message.

The security information 2 further includes N counters, and the N counters are associated with the N pieces of key information in a one-to-one manner. After receiving the security information 2, the first node may send, to the third node, the N counters encapsulated in a secondary node format (for example, the N counters encapsulated in the secondary node format are included in the second configuration). Then, after receiving the N counters encapsulated in the secondary node format, the third node sends, to the terminal, the N counters encapsulated in the secondary node format.

In this way, each time the master node of the terminal is switched to the third node, the first node may perform secure communication with the terminal by using unused key information in the N pieces of key information. For example, the N pieces of key information is key information 1, key information 2, and key information 3. After a configuration process (for example, S302 to S312) is completed, when the master node of the terminal is switched to the third node for a first time, the first node may use the key information 1 to perform secure communication with the terminal. When the master node of the terminal is switched to the third node for a second time, the first node may use the key information 2 to perform secure communication with the terminal, and so on. For processing on a terminal side, refer to descriptions in the security solution 1.

It may be understood that the foregoing description uses the third node as an example. Another candidate master node may also send security information to the first node. In other words, different candidate master nodes allocate respective security information, which is different from the security solution 1 (the security solution 1 is that the initial source master node allocates security information, and the candidate master node does not need to allocate security information). In addition, quantities of pieces of key information allocated by the different candidate master nodes may be the same, or may be different. This is not specifically limited.

### (3) Security solution 3

When the master node of the terminal undergoes handover, the handover target master node is a candidate master node configured with multi-connectivity, and a handover source master node sends a second counter to the terminal. For example, the handover source master node sends the second counter to the terminal by using a handover command message. In addition, the handover source master node sends second key information to the handover target master node, and then the target master node sends the second key information to the first node. For example, the handover source master node sends the second key information to the handover target master node by using a handover notification message (for example, the handover notification message 1), and then the target master node sends the second key information to the first node by using a handover notification message (for example, the handover notification message 2). Alternatively, the handover source master node sends the second key information to the first node. For example, the handover source master node sends the second key information to the first node by using a handover notification message (for example, the handover notification message 3). The second counter is associated with the second key information, and the second key information is determined based on a key of the handover source master node. In this way, the terminal derives the second key information based on the second counter by using the key of the handover source master node, and the first node and the terminal perform secure communication by using the second key information.

Alternatively, when the master node of the terminal undergoes handover, the handover target master node is a candidate master node configured with multi-connectivity, and the handover target master node sends the second counter to the terminal. For example, after the terminal is handed over to the target master node, the target master node sends the second counter to the terminal. In addition, the handover target master node sends the second key information to the first node. For example, the handover target master node sends the second key information to the first node by using a handover notification message (for example, the handover notification message 2). The second counter is associated with the second key information, and the second key information is determined based on a key of the handover target master node. In this way, the terminal derives the second key information based on the second counter by using the key of the handover source master node, and the first node and the terminal perform secure communication by using the second key information.

In this embodiment of this application, "the terminal communicates with the first node by using key information (for example, the first key information)" may mean that the terminal communicates with the first node by using the first key information itself, or may mean that the terminal communicates with the first node by using Krrc and/or Kup derived based on the first key information. Krrc is used for encryption, decryption, and integrity protection of a control message, and Kup is used for encryption, decryption, and integrity protection of user data. For a specific implementation of communication between the terminal and the first node by using the second key information, refer to descriptions of communication between the terminal and the first node by using the first key information.

For the foregoing embodiments, it may be understood that:
(1) The foregoing embodiment describes an implementation procedure of embodiments of this application from a perspective of communication between the network node and the terminal. When the network node includes a CU and one or more DUs, a specific implementation procedure may further include communication between the CU and the DU. For example, the first node may be replaced with a first CU, the second node may be replaced with a second CU, the third node may be replaced with a third CU, and the fourth node may be replaced with a fourth CU. After receiving a handover notification message (for example, the handover notification message 1), the handover target master node (for example, the third CU) may forward some or all content of the handover notification message (for example, the identification information of the first cell and the identification information of the TCI status) to a DU managed by the third CU. In addition, after receiving a handover notification message (for example, the handover notification message 2), the first CU may forward some or all content of the handover notification message (for example, the identification information of the first cell, and the activation request or the deactivation request) to a DU managed by the first CU. For the other procedure, refer to descriptions in the foregoing embodiments.
(2) In any embodiment of the present invention, "performing B (behavior) in response to A (message)" may be understood as "performing B according to A", or may be understood as "performing B because of A". Message names described in embodiments of the present invention are merely examples. This is not specifically limited.
(3) In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof. In addition, in a same embodiment, different implementations or different examples may reference or refer to each other.
(4) Various numbers in this application are merely used for differentiation for ease of description, but are not used to limit the scope of this application. Step numbers in the foregoing flowcharts are merely examples of execution procedures, and do not constitute a limitation on an execution sequence of the steps. In other words, the step numbers do not mean the execution sequence, and the execution sequence of the steps should be determined based on a function and internal logic of the steps. In addition, not all steps shown in each flowchart are mandatory, and some steps may be added or deleted for each flowchart based on an actual requirement.

The foregoing mainly describes the solutions provided in embodiments of this application from a perspective of interaction between the network node and the terminal side apparatus. It may be understood that to implement the foregoing functions, the network node and the terminal side apparatus may include corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the network node and the terminal side apparatus may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

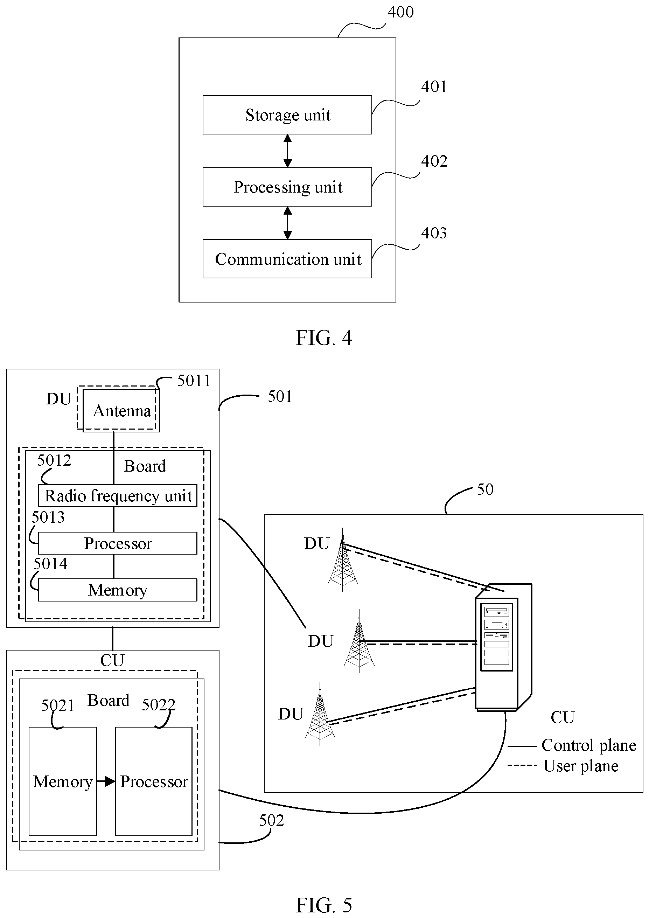

When an integrated unit is used, FIG. 4 is a possible example block diagram of an apparatus according to an embodiment of this application. As shown in FIG. 4, an apparatus 400 may include a processing unit 402 and a communication unit 403. The processing unit 402 is configured to control and manage an action of the apparatus 400. The communication unit 403 is configured to support the apparatus 400 in communicating with another device. Optionally, the communication unit 403 is also referred to as a transceiver unit, and may include a receiving unit and/or a sending unit, configured to respectively perform a receiving operation and a sending operation. The apparatus 400 may further include a storage unit 401, configured to store program code and/or data of the apparatus 400.
(1) The apparatus 400 may be the network node (for example, the first node) in the foregoing embodiment. The processing unit 402 may support the apparatus 400 in performing actions of the first node in the foregoing method examples. Alternatively, the processing unit 402 mainly performs internal actions of the first node in the method examples, and the communication unit 403 may support communication between the apparatus 400 and another device.

For example, in an embodiment, the communication unit 403 is configured to: receive a first message from a third node, where the first message is used to request to add the first node as a secondary node of a second multi-connectivity of a terminal, a multi-connectivity currently serving the terminal is a first multi-connectivity, a master node of the first multi-connectivity is a second node, and a secondary node of the first multi-connectivity is the first node; and send a second message to the third node in response to the first message, where the second message is used to accept adding the first node as the secondary node of the second multi-connectivity, the second multi-connectivity is a candidate multi-connectivity serving the terminal, a master node of the second multi-connectivity is the third node, and the third node is a candidate master node for handover of the terminal.

In a possible design, the communication unit 403 is further configured to: receive a third message, where the third message indicates that a master node of the terminal is switched to the third node; and in response to the third message, determine to use the second multi-connectivity to serve the terminal.

In a possible design, the third message is further used to request to activate a secondary cell group of the second multi-connectivity, and the first node manages the secondary cell group; and the processing unit 402 is configured to activate the secondary cell group of the second multi-connectivity in response to the third message. Alternatively, the third message is further used to request to deactivate the secondary cell group of the second multi-connectivity; and the processing unit 402 is configured to deactivate the secondary cell group of the second multi-connectivity in response to the third message.

In a possible design, the communication unit 403 is further configured to receive security information from the second node or the third node. The security information includes N pieces of key information, and the N pieces of key information are associated with the second multi-connectivity, where N is an integer greater than or equal to 1. After it is determined that the second multi-connectivity is a serving multi-connectivity of the terminal, the processing unit 402 is configured to communicate with the terminal by using first key information, and the first key information is unused key information in the N pieces of key information.

In a possible design, the security information further includes N counters, and the N pieces of key information are associated with the N counters in a one-to-one manner. The communication unit 403 is further configured to send, to the terminal via the third node, the N counters encapsulated in a secondary node format.

In a possible design, the third message further includes second key information. After it is determined that the second multi-connectivity is a serving multi-connectivity of the terminal, the processing unit 402 is configured to communicate with the terminal by using the second key information.

In a possible design, the first message includes first identification information, the first identification information is associated with a first configuration, and the first configuration is used for a secondary cell group of the first multi-connectivity. The processing unit 402 is configured to determine that the first configuration is further used for the secondary cell group of the second multi-connectivity, and the first node manages the secondary cell group of the first multi-connectivity and the secondary cell group of the second multi-connectivity.

In a possible design, the communication unit 403 is further configured to send a fourth message to the second node. The fourth message includes at least one of the following: the first identification information, where the first identification information is associated with the first configuration, and the first configuration is used for the secondary cell group of the first multi-connectivity; identification information of a used RB, where the used RB terminates at the first node; and QoS flow information mapped to the used RB.

In a possible design, the communication unit 403 is further configured to receive a fifth message from a fourth node, where the fifth message is used to request to add the first node as a secondary node of a third multi-connectivity of the terminal, a master node of the third multi-connectivity is the fourth node, and the fourth node is a candidate master node for handover of the terminal; and send a sixth message to the fourth node in response to the fifth message, where the sixth message is used to reject adding the first node as the secondary node of the third multi-connectivity.

(2) The apparatus 400 may be the network node (for example, the third node) in the foregoing embodiment. The processing unit 402 may support the apparatus 400 in performing actions of the third node in the foregoing method examples. Alternatively, the processing unit 402 mainly performs internal actions of the third node in the method examples, and the communication unit 403 may support communication between the apparatus 400 and another device.

For example, in an embodiment, the communication unit 403 is configured to: send a first message to a first node, where the first message is used to request to add the first node as a secondary node of a second multi-connectivity of a terminal, a multi-connectivity currently serving the terminal is a first multi-connectivity, a master node of the first multi-connectivity is a second node, and a secondary node of the first multi-connectivity is the first node; and receive a second message from the first node, where the second message is used to accept adding the first node as the secondary node of the second multi-connectivity, the second multi-connectivity is a candidate multi-connectivity serving the terminal, a master node of the second multi-connectivity is the third node, and the third node is a candidate master node for handover of the terminal.

In a possible design, the communication unit 403 is further configured to send a third message to the first node, and the third message indicates that a master node of the terminal is switched to the third node.

In a possible design, the communication unit 403 is further configured to send security information. The security information includes N pieces of key information, and the N pieces of key information are associated with the second multi-connectivity, where N is an integer greater than or equal to 1.

In a possible design, the security information further includes N counters, and the N pieces of key information are associated with the N counters in a one-to-one manner. The communication unit 403 is further configured to receive, from the first node, the N counters encapsulated in a secondary node format; and send, to the terminal via the second node, the N counters encapsulated in the secondary node format.

In a possible design, the communication unit 403 is further configured to receive first identification information from the second node. The first identification information is associated with a first configuration, and the first configuration is used for a secondary cell group of the first multi-connectivity; and the first message includes the first identification information.

In a possible design, the communication unit 403 is further configured to: receive sequence number status information of a used RB, where the used RB terminates at the first node; and send the sequence number status information to the first node, where the sequence number status information is used to determine a reception window of a packet data convergence protocol PDCP.

(3) The apparatus 400 may be the network node (for example, the fourth node) in the foregoing embodiment. The processing unit 402 may support the apparatus 400 in performing actions of the fourth node in the foregoing method examples. Alternatively, the processing unit 402 mainly performs internal actions of the fourth node in the method examples, and the communication unit 403 may support communication between the apparatus 400 and another device.

For example, in an embodiment, the communication unit 403 is configured to: send a fifth message to a first node, where the fifth message is used to request to add the first node as a secondary node of a third multi-connectivity of a terminal, a multi-connectivity currently serving the terminal is a first multi-connectivity, a master node of the first multi-connectivity is a second node, and a secondary node of the first multi-connectivity is the first node; and receive a sixth message from the first node, where the sixth message is used to reject adding the first node as the secondary node of the third multi-connectivity, the third multi-connectivity is a candidate multi-connectivity serving the terminal, a master node of the third multi-connectivity is the fourth node, and the fourth node is a candidate master node for handover of the terminal.

(4) The apparatus 400 may be the network node (for example, the second node) in the foregoing embodiment. The processing unit 402 may support the apparatus 400 in performing actions of the second node in the foregoing method examples. Alternatively, the processing unit 402 mainly performs internal actions of the second node in the method examples, and the communication unit 403 may support communication between the apparatus 400 and another device.

For example, in an embodiment, the communication unit 403 is configured to: receive a fourth message from a first node, where the fourth message includes first identification information, the first identification information is associated with a first configuration, the first configuration is used for a secondary cell group of a first multi-connectivity of a terminal, a multi-connectivity currently serving the terminal is the first multi-connectivity, a master node of the first multi-connectivity is the second node, and a secondary node of the first multi-connectivity is the first node; and send the first identification information to a third node, where the third node is a candidate master node for handover.

(5) The apparatus 400 may be the terminal side apparatus (for example, the terminal) in the foregoing embodiment. The processing unit 402 may support the apparatus 400 in performing actions of the terminal in the foregoing method examples. Alternatively, the processing unit 402 mainly performs internal actions of the terminal in the method examples, and the communication unit 403 may support communication between the apparatus 400 and another device.

For example, in an embodiment, the communication unit 403 is configured to receive N counters encapsulated in a secondary node format. The N counters are associated with a second multi-connectivity, a master node of the second multi-connectivity is a third node, a secondary node of the second multi-connectivity is a first node, and the third node is a candidate master node for handover. The processing unit 402 is configured to: after a master node of the terminal side apparatus is switched to the third node, communicate with the first node by using a first counter, and the first counter is an unused counter in the N counters.

In another embodiment, the communication unit 403 is configured to receive a handover command message. The handover command message indicates that the master node of the terminal is switched to the third node, the third node is the master node of the second multi-connectivity of the terminal, and the secondary node of the second multi-connectivity is the first node; and the handover command message includes a second counter. The processing unit 402 is configured to: after the master node of the terminal side apparatus is switched to the third node, communicate with the first node by using the second counter.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SOC).

The foregoing unit configured for receiving is an interface circuit of the apparatus, and is configured to receive a signal from another apparatus. For example, when the apparatus is implemented in a form of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a form of a chip, the sending unit is an interface circuit that is of the chip and that is configured to send a signal to another chip or apparatus.

FIG. 5 is a diagram of a structure of a network node according to an embodiment of this application. The network node may be used in the communication system shown in FIG. 1, to perform functions of the network node in the foregoing method embodiments. As shown in FIG. 5, the network node 50 may include one or more DUs 501 and one or more CUs 502. The DU 501 may include at least one antenna 5011, at least one radio frequency unit 5012, at least one processor 5013, and at least one memory 5014. The DU 501 part is mainly configured to receive/send a radio frequency signal, perform conversion between the radio frequency signal and a baseband signal, and perform partial baseband processing. The CU 502 may include at least one processor 5022 and at least one memory 5021.

The CU 502 part is mainly configured to perform baseband processing, control the network node, and the like. The DU 501 and the CU 502 may be physically disposed together, or may be physically disposed separately, namely, a distributed base station. The CU 502 is a control center of the network node, may also be referred to as a processing unit, and is mainly configured to complete a baseband processing function. For example, the CU 502 may be configured to control the network node to perform an operation procedure related to the network node in the foregoing method embodiment.

In addition, optionally, the network node 50 may include one or more radio frequency units, one or more DUs, and one or more CUs. The DU may include at least one processor 5013 and at least one memory 5014, the radio frequency unit may include at least one antenna 5011 and at least one radio frequency unit 5012, and the CU may include at least one processor 5022 and at least one memory 5021.

In an instance, the CU 502 may include one or more boards. A plurality of boards may jointly support a radio access network of a single access standard (for example, a 5G network), or may separately support radio access networks of different access standards (for example, an LTE network, a 5G network, or another network). The memory 5021 and the processor 5022 may serve the one or more boards. In other words, a memory and a processor may be disposed on each board. Alternatively, a plurality of boards may share a same memory and a same processor. In addition, a necessary circuit may further be disposed on each board. The DU 501 may include one or more boards. A plurality of boards may jointly support a radio access network of a single access standard (for example, a 5G network), or may separately support radio access networks of different access standards (for example, an LTE network, a 5G network, or another network). The memory 5014 and the processor 5013 may serve one or more boards. In other words, a memory and a processor may be disposed on each board. Alternatively, a plurality of boards may share a same memory and a same processor. In addition, a necessary circuit may further be disposed on each board.

The network node shown in FIG. 5 can implement processes related to the network node in the foregoing method embodiments. Operations and/or functions of the modules in the network node shown in FIG. 5 are respectively used to implement corresponding procedures in the foregoing method embodiments. For details, refer to the descriptions in the foregoing method embodiments. To avoid repetition, detailed descriptions are properly omitted herein.

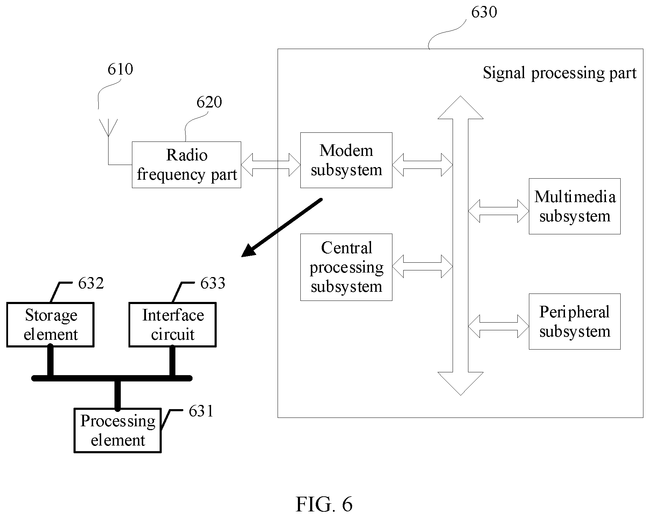

FIG. 6 is a diagram of a structure of a terminal side apparatus (for example, a terminal) according to an embodiment of this application. The terminal may be used in the communication system shown in FIG. 1, to implement operations of the terminal in the foregoing embodiments. As shown in FIG. 6, the terminal includes an antenna 610, a radio frequency part 620, and a signal processing part 630. The antenna 610 is connected to the radio frequency part 620. In a downlink direction, the radio frequency part 620 receives, through the antenna 610, information sent by a network device, and sends, to the signal processing part 630 for processing, the information sent by the network device. In an uplink direction, the signal processing part 630 processes information from the terminal, and sends the information to the radio frequency part 620. The radio frequency part 620 processes the information from the terminal, and then sends processed information to the network device through the antenna 610.

The signal processing part 630 may include a modem subsystem, configured to process data at each communication protocol layer, and may further include a central processing subsystem, configured to implement processing at an operating system layer and an application layer of the terminal. In addition, the signal processing part 630 may further include another subsystem, for example, a multimedia subsystem or a peripheral subsystem. The multimedia subsystem is configured to control a camera, a screen display, or the like of the terminal. The peripheral subsystem is configured to implement a connection to another device. The modem subsystem may be a separately disposed chip.

The modem subsystem may include one or more processing elements 631, for example, include one main control CPU and another integrated circuit. In addition, the modem subsystem may further include a storage element 632 and an interface circuit 633. The storage element 632 is configured to store data and a program. However, the program used to perform the method performed by the terminal in the foregoing methods may not be stored in the storage element 632, but is stored in a memory outside the modem subsystem, and is loaded and used by the modem subsystem when to be used. The interface circuit 633 is configured to communicate with another subsystem.

The modem subsystem may be implemented by using a chip. The chip includes at least one processing element and an interface circuit. The processing element is configured to perform steps of any method performed by the terminal. The interface circuit is configured to communicate with another apparatus. In an implementation, units in the terminal for implementing the steps in the foregoing methods may be implemented in a form in which a processing element schedules a program. For example, the apparatus used in the terminal includes a processing element and a storage element. The processing element invokes a program stored in the storage element, to perform the method performed by the terminal in the foregoing method embodiments. The storage element may be a storage element located on a same chip as the processing element, that is, an on-chip storage element.

In another implementation, a program used to perform the method performed by the terminal in the foregoing methods may be in a storage element located on a different chip from the processing element, namely, an off-chip storage element. In this case, the processing element invokes or loads the program from the off-chip storage element to the on-chip storage element, to invoke and perform the method performed by the terminal in the foregoing method embodiments.

In still another implementation, units in the terminal for implementing the steps in the foregoing methods may be configured as one or more processing elements. These processing elements are disposed on the modem subsystem. The processing element herein may be an integrated circuit, for example, one or more ASICs, one or more DSPs, one or more FPGAs, or a combination of these types of integrated circuits. These integrated circuits may be integrated together to form a chip.

The units in the terminal for implementing the steps in the foregoing methods may be integrated together and implemented in a form of an SOC, and the SOC chip is configured to implement the foregoing methods. At least one processing element and a storage element may be integrated into the chip, and the processing element invokes a program stored in the storage element to implement the foregoing method performed by the terminal. Alternatively, at least one integrated circuit may be integrated into the chip, to implement the foregoing method performed by the terminal. Alternatively, with reference to the foregoing implementations, functions of some units may be implemented in a form in which the processing element invokes a program, and functions of some units may be implemented by the integrated circuit.

It can be learned that the foregoing apparatus used in the terminal may include at least one processing element and an interface circuit. The at least one processing element is configured to perform any method performed by the terminal in the foregoing method embodiments. The processing element may perform some or all steps performed by the terminal in a first manner, that is, by invoking a program stored in the storage element; or may perform some or all steps performed by the terminal in a second manner, that is, by combining instructions and a hardware integrated logic circuit in the processing element. Certainly, some or all steps performed by the terminal may alternatively be performed by combining the first manner and the second manner.

The processing element herein is the same as that described above, and may be implemented by using a processor. A function of the processing element may be the same as a function of the processing unit described in FIG. 4. For example, the processing element may be a general-purpose processor, for example, a CPU, or may be one or more integrated circuits configured to implement the foregoing method, for example, one or more ASICs, one or more microprocessors DSPs, one or more FPGAs, or a combination of at least two of the integrated circuit forms. The storage element may be implemented by using a memory, and a function of the storage element may be the same as a function of the storage unit described in FIG. 4. The storage element may be a memory, or may be a collective name of a plurality of memories.

The terminal shown in FIG. 6 can implement processes related to the terminal in the foregoing method embodiments. Operations and/or functions of modules in the terminal shown in FIG. 6 are respectively intended to implement corresponding procedures in the foregoing method embodiments. For details, refer to the descriptions in the foregoing method embodiments. To avoid repetition, detailed descriptions are properly omitted herein.

An embodiment of this application further provides a communication system. The communication system includes the terminal in the foregoing method embodiment, further includes the first network device in the foregoing method embodiment, and optionally, further includes the third network device in the foregoing method embodiment.

The terms "system" and "network" may be used interchangeably in embodiments of this application. "At least one" means one or more, and "a plurality of" means two or more. The term "and/or" describes an association relationship of associated objects, and represents that three relationships may exist. For example, A and/or B may represent the following three cases: Only A exists, both A and B exist, and only B exists, where A and B may be singular or plural. The character "/" generally represents an "or" relationship between the associated objects. At least one of the following items (pieces) or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a magnetic disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. A communication method, wherein the method is applied to a first node, and the method comprises:
receiving a first message from a third node, wherein the first message is used to request to add the first node as a secondary node of a second multi-connectivity of a terminal, a multi-connectivity currently serving the terminal is a first multi-connectivity, a master node of the first multi-connectivity is a second node, and a secondary node of the first multi-connectivity is the first node; and
sending a second message to the third node in response to the first message, wherein the second message is used to accept adding the first node as the secondary node of the second multi-connectivity, the second multi-connectivity is a candidate multi-connectivity serving the terminal, a master node of the second multi-connectivity is the third node, and the third node is a candidate master node for handover of the terminal.

2. The method according to claim 1, wherein the method further comprises:
receiving a third message, wherein the third message indicates that a master node of the terminal is switched to the third node; and
in response to the third message, determining to use the second multi-connectivity to serve the terminal.

3. The method according to claim 2, wherein the second message comprises first information, and the first information is used by the terminal to listen to a control channel of the first node after the terminal determines to use the second multi-connectivity to serve the terminal.

4. The method according to claim 2, wherein the third message is further used to request to activate a secondary cell group of the second multi-connectivity, and the first node manages the secondary cell group; and the method further comprises: activating the secondary cell group of the second multi-connectivity in response to the third message; or
the third message is further used to request to deactivate the secondary cell group of the second multi-connectivity, and the method further comprises: deactivating the secondary cell group of the second multi-connectivity in response to the third message.

5. The method according to any one of claims 2 to 4, wherein the method further comprises:
receiving security information from the second node or the third node, wherein the security information comprises N pieces of key information, the N pieces of key information are associated with the second multi-connectivity, and N is an integer greater than or equal to 1; and
after it is determined that the second multi-connectivity is a serving multi-connectivity of the terminal, the method further comprises: communicating with the terminal by using first key information, wherein the first key information is unused key information in the N pieces of key information.

6. The method according to claim 5, wherein the security information is carried in the first message.

7. The method according to claim 5 or 6, wherein the security information further comprises N counters, and the N pieces of key information are associated with the N counters in a one-to-one manner; and
the method further comprises: sending, to the terminal via the third node, the N counters encapsulated in a secondary node format.

8. The method according to any one of claims 2 to 4, wherein the third message further comprises second key information; and
after it is determined that the second multi-connectivity is a serving multi-connectivity of the terminal, the method further comprises: communicating with the terminal by using the second key information.

9. The method according to any one of claims 1 to 8, wherein the first message comprises first identification information, the first identification information is associated with a first configuration, and the first configuration is used for a secondary cell group of the first multi-connectivity; and
the method further comprises:
determining that the first configuration is further used for the secondary cell group of the second multi-connectivity, wherein
the first node manages the secondary cell group of the first multi-connectivity and the secondary cell group of the second multi-connectivity.

10. The method according to any one of claims 1 to 9, wherein the method further comprises:
sending a fourth message to the second node, wherein the fourth message comprises at least one of the following:
the first identification information, wherein the first identification information is associated with the first configuration, and the first configuration is used for the secondary cell group of the first multi-connectivity;
identification information of a used radio bearer RB, wherein the used RB terminates at the first node; and
quality of service QoS flow information mapped to the used RB.

11. The method according to any one of claims 1 to 10, wherein the method further comprises:
receiving a fifth message from a fourth node, wherein the fifth message is used to request to add the first node as a secondary node of a third multi-connectivity of the terminal, the third multi-connectivity is a candidate multi-connectivity serving the terminal, a master node of the third multi-connectivity is the fourth node, and the fourth node is a candidate master node for handover of the terminal; and
sending a sixth message to the fourth node in response to the fifth message, wherein the sixth message is used to reject adding the first node as the secondary node of the third multi-connectivity.

12. A communication method, wherein the method is applied to a third node, and the method comprises:
sending a first message to a first node, wherein the first message is used to request to add the first node as a secondary node of a second multi-connectivity of a terminal, a multi-connectivity currently serving the terminal is a first multi-connectivity, a master node of the first multi-connectivity is a second node, and a secondary node of the first multi-connectivity is the first node; and
receiving a second message from the first node, wherein the second message is used to accept adding the first node as the secondary node of the second multi-connectivity, the second multi-connectivity is a candidate multi-connectivity serving the terminal, a master node of the second multi-connectivity is the third node, and the third node is a candidate master node for handover of the terminal.

13. The method according to claim 12, wherein the method further comprises:
sending a third message to the first node, wherein the third message indicates that a master node of the terminal is switched to the third node.

14. The method according to claim 13, wherein the third message is further used to request to activate a secondary cell group of the second multi-connectivity or deactivate the secondary cell group of the second multi-connectivity, and the first node manages the secondary cell group.

15. The method according to any one of claims 12 to 14, wherein the method further comprises:
sending security information, wherein the security information comprises N pieces of key information, the N pieces of key information are associated with the second multi-connectivity, and N is an integer greater than or equal to 1.

16. The method according to claim 15, wherein the security information is carried in the first message.

17. The method according to claim 15 or 16, wherein the security information further comprises N counters, and the N pieces of key information are associated with the N counters in a one-to-one manner; and
the method further comprises:
receiving, from the first node, the N counters encapsulated in a secondary node format; and
sending, to the terminal via the second node, the N counters encapsulated in the secondary node format.

18. The method according to any one of claims 12 to 17, wherein the method further comprises:
receiving first identification information from the second node, wherein the first identification information is associated with a first configuration, and the first configuration is used for a secondary cell group of the first multi-connectivity; and
the first message comprises the first identification information.

19. The method according to any one of claims 12 to 18, wherein the method further comprises:
receiving sequence number status information of a used RB, wherein the used RB terminates at the first node; and
sending the sequence number status information to the first node, wherein the sequence number status information is used to determine a reception window of a packet data convergence protocol PDCP.

20. A communication apparatus, comprising units configured to perform the method according to any one of claims 1 to 11, or units configured to perform the method according to any one of claims 12 to 19.

21. A communication apparatus, comprising a processor, wherein the processor is coupled to a memory, the memory stores a computer program, and the processor is configured to invoke the computer program in the memory, so that the communication apparatus is enabled to perform the method according to any one of claims 1 to 11 or the method according to any one of claims 12 to 19.

22. A communication system, wherein the communication system comprises a first node and a third node, the first node is configured to perform the method according to any one of claims 1 to 11, and the third node is configured to perform the method according to any one of claims 12 to 19.

23. A computer-readable storage medium, wherein the storage medium stores a computer program or instructions, and when the computer program or the instructions are executed by a computer, the method according to any one of claims 1 to 11 or the method according to any one of claims 12 to 19 is performed.

24. A computer program product, wherein when a computer reads and executes the computer program product, the method according to any one of claims 1 to 11 is performed, or the method according to any one of claims 12 to 19 is performed.
